# EUROPÄISCHE PATENTANMELDUNG

(11) **EP 3 827 981 A1**
(43) Veröffentlichungstag der Anmeldung: **02.06.2021**
(21) Anmeldenummer: 20204254.5
(22) Anmeldetag: 28.10.2020
(51) Int. Cl.: B32B 25/08, B32B 27/08, B32B 27/30, B32B 27/34, C08L 51/04, C08L 51/06, C08L 77/06

(54) **WERKSTOFF-VERBUNDE**

(30) Priorität: 30.10.2019 CH 13742019
(71) Anmelder: EMS-CHEMIE AG, 7013 Domat/Ems (CH)
(72) Erfinder: Aepli, Etienne, 7013 Domat/Ems (CH); Hoffmann, Botho, 7013 Domat/Ems (CH)

(57) **Zusammenfassung**

Verbund enthaltend direkt aneinander grenzende und miteinander stoffschlüssig verbundene Teilbereiche (I) und (II) folgender Art:
(I) Teilbereich, gebildet aus einer thermoplastischen Formmasse FM-1 enthaltend wenigstens ein Polyamid (A) sowie optional Füll- und Verstärkungsstoffe (C) und Additive (D);
(II) Teilbereich, gebildet aus einer thermoplastischen Formmasse enthaltend wenigstens ein olefinisches und/oder vinylaromatisches Polymer (E) sowie optional Füll- und Verstärkungsmittel (F), Weichmacher (G) und Additive (H);
wobei die Formmasse FM-1 oder FM-2 0.1 bis 5.0 Gewichtsprozent Polyethylenimin (B) oder eines Copolymeren oder Derivates davon enthält sowie ein Verfahren zur Herstellung solcher Verbunde.

## Beschreibung

### TECHNISCHES GEBIET

Die vorliegende Erfindung betrifft Werkstoffverbunde, bei denen Teilbereiche auf Basis von Polyamiden und Teilbereiche auf Basis von olefinischen/vinylaromatischen Polymeren an den Berührungszonen der beiden Teilbereiche ohne Zwischenschicht oder Kleber fest miteinander verbunden sind sowie Verfahren zur Herstellung dieser Werkstoffverbunde.

### STAND DER TECHNIK

Thermoplastische Polyamid-Werkstoffe haben sich für die Herstellung von strukturellen Bauteilen unter anderem wegen ihrer guten mechanischen Eigenschaften, der Widerstandsfähigkeit gegenüber Chemikalien, der guten Verarbeitbarkeit, des niedrigen spezifischen Gewichts etc. in vielen Bereichen durchgesetzt, insbesondere im Automobilbereich, aber auch im Elektronik-Bereich, beispielsweise für Gehäuse von tragbaren Geräten.

Insbesondere im Bereich der Automobil-Funkschlüssel aber auch im Bereich anderer elektrischer und elektronischer Geräte werden für Schalterabdeckungen, insbesondere wenn diese vor dem Eindringen von Feuchtigkeit oder Wasser geschützt sein sollen, weiche, hoch flexible Kunststoffe eingesetzt. Diese Abdeckungen aus hochflexiblen olefinischen/vinylaromatischen Polymeren müssen mit den steifen Gehäusebestandteilen verbunden werden, und die Verbundhaftung soll so stark wie möglich sein. Häufig wird zusätzlich gefordert, dass dieser Verbund auch bei höheren Temperaturen und gleichzeitiger Anwesenheit von Feuchtigkeit/Wasser beständig ist. In der Regel wird die Verbundhaftung zwischen steifem Polyamid und weichem olefinischen/vinylaromatischen Polymer dadurch verbessert, dass der Polyamidformmasse eine gewisse Menge an olefinischen/vinylaromatischen Polymeren hinzugesetzt wird oder die olefinischen/vinylaromatischen Polymeren mit Carbonsäure- oder Anhydridgruppen gepfropft werden.

Problematisch in diesem Zusammenhang ist aber, dass die Haftung zwischen olefinischen/vinylaromatischen Polymeren und dem modifizierten Polyamid bzw. zwischen den modifizierten olefinischen/vinylaromatischen Polymeren und dem Polyamid nach der Lagerung bei erhöhter Temperatur und/oder Feuchtigkeit ungenügend ist. Modifizierte olefinische/vinylaromatische Polymere haften zwar direkt nach der Herstellung der Verbunde, verlieren aber die Verbundhaftung nach Lagerung bei einer Temperatur von 70 °C und einer relativen Feuchte von 62% sehr schnell. Modifiziert man das Polyamid mit einer geeigneten Menge an Weichkomponente, so verliert man die hervorragenden mechanischen Eigenschaften, die gute Verarbeitbarkeit, sowie die anderen oben genannten Eigenschaften des Polyamids. Hier greift die vorliegende Erfindung ein.

### DARSTELLUNG DER ERFINDUNG

Es ist entsprechend Aufgabe der Erfindung, einen thermoplastischen Werkstoff-Verbund auf Basis von thermoplastischen Polyamiden und thermoplastischen, olefinischen/vinylaromatischen Polymeren bereitzustellen, welche für die genannten Anwendungen geeignete mechanische Eigenschaften aufweist, aber gleichzeitig auch eine ausgezeichnete Verbundhaftung nach Lagerung bei erhöhter Temperatur und Anwesenheit von Feuchtigkeit, insbesondere einer Temperatur von 70 °C und einer relativen Feuchtigkeit von wenigstens 50 %, besitzt. Diese Aufgabe wird gelöst durch die Gegenstände der Ansprüche, insbesondere durch einen Verbund aus wenigstens einem Teilbereich auf Basis von Polyamid, und wenigstens einem daran angrenzenden Teilbereich aus olefinischen/vinylaromatischen Polymeren sowie die Verwendung von Polyethyleniminen, oder Copolymeren oder Derivaten davon, zur Verbesserung der Verbundhaftung zwischen den unterschiedlichen Teilbereichen.

Ein Kern der Erfindung besteht damit letzten Endes darin, dass unerwarteter Weise gefunden wurde, dass Polyethylenimine die Haftung zwischen einer thermoplastischen Polyamid-Formmasse und einer thermoplastischen Formmasse auf Basis von olefinischen/vinylaromatischen Polymeren, insbesondere enthaltend Polystyrol-Blockcopolymere, wie z.B. SEBS und SEBS-g-MAH, aussergewöhnlich verbessert. Dabei können die Polethylenimine der Polyamid-Formmasse oder der Formmasse auf Basis der olefinischen/vinylaromatischen Polymeren zugesetzt werden. Und dies ohne, dass dabei die vorteilhaften mechanischen Eigenschaften der Formmassen auf Basis von Polyamiden oder olefinischen/vinyl-aromatischen Polymeren verloren gehen. Zudem wird erstaunlicherweise diese hohe Verbundhaftung auch unter dem Einfluss von Wärme und Feuchtigkeit über lange Zeit beibehalten. Bevorzugt erreicht der erfindungsgemässe Verbund (ungelagert bzw. nach der Herstellung) eine Verbundhaftung (Schälkraft) von mindestens 50 N, insbesondere von mindestens 70 N. Weiterhin nimmt die Verbundhaftung des erfindungsgemässen Verbundes während einer 120 stündigen Lagerung bei 70 °C und 62 % relativer Feuchte bevorzugt um weniger als 30%, insbesondere bevorzugt um weniger als 20% bezogen auf den Ausgangswert vor der Lagerung, ab. Die Verbundhaftung wird mittels eines Rollenschälversuches bei 23 °C bestimmt, bei dem der 30 mm breite Teilbereich (II) des für die Messung verwendeten Verbund-Formkörpers über eine Rolle im Winkel von 90° mit einer Zuggeschwindigkeit von 50mm/min vom Teilbereich (I) abgeschält wird; als Verbundhaftung wird die mittlere Schälkraft [N] über der Messstrecke angegeben.

Es ist grundsätzlich aus anderen Gebieten bekannt, dass einer Polyamid-Formmasse Polyethylenimine beigemischt werden können, dies aber nicht im Zusammenhang mit der Frage der Verbundhaftung an thermoplastischen Elastomeren, insbesondere an Formmassen auf Basis von olefinischen/vinylaromatischen Polymeren.

Im Zusammenhang mit dem Stand der Technik sei auf folgende Dokumente hingewiesen: WO-A-2015024912 und ähnlich WO2015024911 beschreiben ein Compositkunststoffteil, das eine erste Kunststoffkomponente und eine zweite Kunststoffkomponente aufweist und ein Polyethylenimin zur Verbesserung der Adhäsion dazwischen enthält. Weiterhin betreffen sie ein Verfahren zur Herstellung dieses Compositkunststoffteils, ein Verfahren zur Verbesserung der Adhäsion zwischen einer ersten Kunststoffkomponente und einer zweiten Kunststoffkomponente in einem Compositkunststoffteil sowie die Verwendung von Polyethylenimin zur Verbesserung der Adhäsion zwischen einer ersten Kunststoffkomponente und einer zweiten Kunststoffkomponente in einem Compositkunststoffteil. Bei beiden Kunststoffkomponenten handelt es sich um Polyamid. Darüber hinaus enthält eine Kunststoffkomponente ein dreidimensionales Verstärkungsgewebe und ist damit weder durch Spritzguss noch durch Extrusion thermoplastisch verarbeitbar. Als haftvermittelnde Schicht zwischen den beiden Kunststoffkomponenten wird eine verstärkungsfaserfreie Folie auf Basis Polyamid verwendet. Somit werden alle beschriebenen Berührungszonen durch Formmassen auf Basis von Polyamid ausgebildet.

WO-A-2011138300 beschreibt ein Verbundteil, das aus mindestens einem Teilstück aus einer Polyamidformmasse und mindestens einem Teilstück aus einem vulkanisierten Elastomer, beispielsweise EPDM, EPM, ACM, Fluorkautschuk, NBR, H-NBR oder AEM einzeln oder in Kombination besteht. Dabei besteht die Polyamidformmasse zu mindestens 40 Gew.-% aus der Mischung folgender Komponenten: a) 60 bis 99 Gew.-Teile Polyamid sowie b) 1 bis 40 Gew.-Teile eines Pfropfcopolymers, das unter Verwendung folgender Monomere hergestellt werden kann: a) 0,5 bis 25 Gew.-%, bezogen auf das Pfropfcopolymer, eines Polyamins mit mindestens 4 Stickstoffatomen sowie b) 75 bis 99,5 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure, wobei die Summe der Gew.-Teile von a) und b) 100 beträgt. Die Anwesenheit des Pfropfcopolymers bewirkt angeblich eine verbesserte Haftung zwischen den Teilstücken.

Die hier im Rahmen dieser Anmeldung vorgeschlagenen thermoplastischen Polyamid-Formmassen respektive Verbundteile sind frei von derartigen vernetzten bzw. vulkanisierten Elastomer-Elementen, die beispielsweise EPDM, EPM, ACM, Fluorkautschuk, NBR, H-NBR oder AEM einzeln oder in Kombination enthalten können. Die Elastomere können in Form eines Kautschukcompounds eingesetzt sein, das beispielsweise Vulkanisationsmittel, Vulkanisationsaktivatoren, Öle und/oder Füllstoffe enthalten. Die hier vorgeschlagenen thermoplastischen Polyamid-Formmassen sind zudem bevorzugt frei von Pfropfcopolymer, das unter Verwendung folgender Monomerer hergestellt werden kann: a) 0,5 bis 25 Gew.-%, bezogen auf das Pfropfcopolymer, eines Polyamins mit mindestens 4 Stickstoffatomen sowie b) 75 bis 99,5 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure, wobei die Summe der Gew.-Teile von a) und b) 100 beträgt.

Vorzugsweise werden im Rahmen dieser Anmeldung als Komponente (B) ausschliesslich ungepfropfte Polyethylenimine eingesetzt, d.h. die Formmasse als Ganzes ist frei von gepfropften Polyethyleniminen.

EP-A-1541336 betrifft einen thermoplastischen Mehrschichtverbund aufgebaut aus wenigstens einer ersten Schicht auf Basis von Fluorpolymeren, sowie wenigstens einer weiteren, wenigstens bereichsweise unmittelbar an die erste Schicht grenzenden zweiten Schicht. Bei einem derartigen Mehrschichtverbund wird eine Haftung zwischen den beiden Schichten erreicht, indem die zweite Schicht auf Basis von Polyamid/Polyamin-Copolymeren aufgebaut ist. Eine derartige zweite Schicht kann insbesondere vorteilhafterweise als Haftvermittlerschicht zu einer weiteren, dritten Schicht verwendet werden, welche auf Basis von Polyamid aufgebaut ist. Als Hohlkörper bzw. Hohlprofil ausgebildet kann ein derartiger Aufbau aus wenigstens 3 Schichten als Kraftstoffleitung im Kraftfahrzeugbereich eingesetzt werden.

Vorzugsweise werden im Rahmen dieser Anmeldung als Komponente (B) ausschliesslich Polyethylenimine eingesetzt, die keine amidbildenden Coplymerbausteine enthalten, d.h. die Formmasse als Ganzes ist frei von Polyethyleniminen, die amidbildende Copolymerbausteine enthalten.

DE 197 36 345 A1 betrifft eine thermoplastische Mehrkomponenten Spritzgiessformmasse aus zumindest teilweise unverträglichen Einzelkomponenten, in welchen die Einzelkomponenten Polyamid-Formmasse und modifiziertes Blockcopolymer, durch Spritzgießen oder Extrusion fest miteinander verbunden sind. Das Blockcopolymer beruht dabei auf vinylaromatischen und olefinischen Monomeren und ist mit Carboxylgruppen oder davon abgeleiteten Gruppen gepfropft. Die Polyamid-Formmasse enthält zur Verbesserung der Haftung das modifizierte Blockcopolymer. Die Verbundhaftung ist direkt nach dem Spritzguss gut, sinkt aber bei Lagerung im Normklima (70 °C/ 62 % rel. Feuchte) bereits nach 1 bis 2 Tagen auf ungenügende Werte ab.

Konkret betrifft die vorliegende Erfindung entsprechend einen Verbund, enthaltend direkt aneinander grenzende und miteinander stoffschlüssig verbundene Teilbereiche (I) und (II) folgender Art:
(I) Teilbereich, gebildet aus einer thermoplastischen Formmasse FM-1 enthaltend wenigstens ein Polyamid (A) sowie optional Füll- und/oder Verstärkungsstoffe (C) und Additive (D);
(II) Teilbereich, gebildet aus einer thermoplastischen Formmasse FM-2 enthaltend wenigstens ein olefinisches und/oder vinylaromatisches Polymer (E) sowie optional Füll- und Verstärkungsmittel (F), Weichmacher (G) und Additive (H);
wobei die Formmasse FM-1 oder die Formmasse FM-2 0.1 bis 5.0 Gewichtsprozent Polyethylenimin (B) oder eines Copolymeren oder Derivates davon enthält.

Bevorzugt enthält Formmasse FM-1 oder FM-2 das Polyethylenimin (B) in einem Anteil von 0.5-4.0 Gewichtsprozent, besonders bevorzugt in einem Anteil von 0.8-3.0 Gewichtsprozent, jeweils bezogen auf das Gesamtgewicht der Formmasse FM-1 oder FM-2.

Der erfindungsgemässe Verbund stellt demnach einen Formkörper dar, bei dem mindestens ein Teilbereich (I) und mindestens ein Teilbereich (II) existiert, welche stoffschlüssig wenigstens in einem Punkt oder wenigstens einer Berührungsfläche miteinander verbunden sind, und zwar ohne Mitwirkung einer haftvermittelnden Zwischenschicht oder eines Klebers. D.h. die Teilbereiche (I) und (II) stehen in wenigstens einem Punkt in direktem Kontakt und sind über diesen Kontakt miteinander verbunden. So kann die Berührungsfläche, z.B. bei einer flächigen Ausbildung einer oder beider Teilbereiche, nur auf eine einzige schmale Seitenfläche des betrachteten Teilbereiches begrenzt sein oder alle Seitenflächen eines Teilbereiches umfassen oder aber auch durch teilweise oder vollständige Überlappung der oberen oder unteren Fläche der Teilbereiche charakterisiert sein. Auch kann z.B. der Teilbereich (II) gleichzeitig mit einer oder allen Seitenflächen und einen Teil seiner Ober- oder Unterseite mit dem Teilbereich (I) verbunden sein.

Bevorzugt handelt es sich beim erfindungsgemässen Werkstoff-Verbund um einen Hart-Weich-Verbund, bei dem die Teilbereiche (I) eine höhere Shore Härte D bzw. A aufweisen, als die Teilbereiche (II), jeweils bestimmt nach ISO 7619-1 (2012-02) in trockenem Zustand. In diesem Zusammenhang wird besonders bevorzugt, wenn die Teilbereiche (I) eine Shore Härte von wenigstens 70D, bevorzugt von wenigstens 75D und insbesondere bevorzugt von mindestens 80D aufweisen und/oder die Teilbereiche (II) eine Shore Härte von höchstens 60D, bevorzugt von höchstens 50D und insbesondere bevorzugt von höchstens 39D oder 90A aufweisen, jeweils bestimmt nach ISO 7619-1 (2012-02) in trockenem Zustand.

Weiterhin ist der E-Modul der Teilbereiche (I) vorzugsweise grösser als der E-Modul der Teilbereiche (II), jeweils bestimmt nach ISO 527 (2012) in trockenem Zustand. So wird bevorzugt, dass der Teilbereich (I) einen E-Modul von wenigstens 1000 MPa, bevorzugt von wenigstens 4000 MPa und insbesondere bevorzugt von mindestens 8000 MPa aufweist und/oder der Teilbereich (II) einen E-Modul von höchstens 500 MPa, bevorzugt von höchstens 300 MPa und insbesondere bevorzugt von höchstens 200 MPa aufweist.

Vorzugsweise stellt der erfindungsgemässe Werkstoff-Verbund einen Hart-Weich-Verbund dar, bei dem steife (harte) und flexible (weiche) Teilbereiche nebeneinander vorliegen und wenigstens in einem Punkt oder wenigstens in einer Berührungsfläche miteinander verbunden sind. Bevorzugt bilden die steifen (harten) Teilbereiche (I) und flexiblen (weichen) Teilbereiche (II) unterschiedliche Bereiche des Formkörpers selbständig aus und sind nur an den berührenden Übergängen zwischen den Teilbereichen, also den Berührungspunkten oder -flächen, die wie oben erläutert, z.B. anstossend und/oder überlappend ausgeführt sein können, miteinander verbunden. So kommen die speziellen, stark unterschiedlichen Materialeigenschaften der einzelnen Teilbereiche (I) und (II) im Verbund voll zum Tragen. Damit müssen zur Herstellung der verschiedenen Teilbereiche auch völlig unterschiedliche Formmassen verwendet werden. Zur Herstellung der harten Teilbereiche (I) wird die Formmasse FM-1 auf Basis von Polyamiden und zur Herstellung der Teilbereiche (II) wird die Formmasse FM-2 auf Basis von olefinischen/vinylaromatischen Polymeren eingesetzt.

Im Sinne der vorliegenden Erfindung werden die Begriffe "olefinisches/vinylaromatisches Polymer" und "olefinisches und/oder vinylaromatisches Polymer" synonym verwendet und darunter ein Oberbegriff verstanden, welcher sowohl Homo- und Copolyolefine sowie Copolymere aus vinylaromatischen und olefinischen Monomeren, als auch deren mit Carbonsäure- oder Carbonsäureanhydridgruppen gepfropften Modifikate umfasst.

Im Sinne der vorliegenden Erfindung wird unter dem Begriff "Polyamid" (Abkürzung PA) ein Oberbegriff verstanden, welcher Homopolyamide und Copolyamide umfasst. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methyl-cyclohexyl)methan (auch als 3,3'-Dimethyl-4,4'-diaminodicyclo-hexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-dimethyl-cyclohexyl)methan (auch als 3,3',5,5'-Tetramethyl-4,4'-diamino-dicyclohexylmethan bezeichnet, CAS-Nr. 65962-45-0), T für Terephthalsäure (CAS-Nr. 100-21-0), I für Isophthalsäure (CAS-Nr. 121-95-5).

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 5 J/g, besonders bevorzugt von wenigstens 25 J/g, ganz besonders bevorzugt von wenigstens 30 J/g aufweisen.

Gemäss einer ersten bevorzugten Ausführungsform ist der erfindungsgemässe Verbund dadurch gekennzeichnet, dass die thermoplastische Formmasse FM-1 folgende Komponenten enthält:
(A) 30-99.9 Gewichtsprozent wenigstens eines Polyamides;
(B) 0.1-5.0 Gewichtsprozent Polyethylenimin oder Copolymere oder Derivate davon;
(C) 0-60 Gewichtsprozent Füll- und/oder Verstärkungsstoffe;
(D) 0-5.0 Gewichtsprozent Additive, verschieden von (A) - (C);
wobei die Summe gebildet aus (A)-(D) 100 Gewichtsprozent der thermoplastischen Polyamid-Formmasse FM-1 ergibt,
und dass die thermoplastische Formmasse FM-2 folgende Komponenten enthält:
(E) 45-100 Gewichtsprozent wenigstens eines olefinischen und/oder vinylaromatischen Polymeren;
(F) 0-15 Gewichtsprozent Füll- und/oder Verstärkungsstoffe;
(G) 0-35 Gewichtsprozent Weichmacher;
(H) 0-5.0 Gewichtsprozent Additive, verschieden von (E), (F) und (G);
wobei die Summe gebildet aus (E)-(H) 100 Gewichtsprozent der thermoplastischen Formmasse FM-2 ergibt. Die Formmasse FM-2 ist hierbei frei an Komponente (B).

Gemäss einer zweiten bevorzugten Ausführungsform ist der Verbund dadurch gekennzeichnet, dass die thermoplastische Formmasse FM-1 folgende Komponenten enthält:
(A) 35-100 Gewichtsprozent wenigstens eines Polyamides;
(C) 0-60 Gewichtsprozent Füll- und/oder Verstärkungsstoffe;
(D) 0-5.0 Gewichtsprozent Additive, verschieden von (A) und (C);
wobei die Summe gebildet aus (A), (C) und (D) 100 Gewichtsprozent der thermoplastischen Polyamid-Formmasse FM-1 ergibt,
und dass die thermoplastische Formmasse FM-2 folgende Komponenten enthält:
(E) 40-99.9 Gewichtsprozent wenigstens eines olefinischen und/oder vinylaromatischen Polymeren;
(B) 0.1-5.0 Gewichtsprozent Polyethylenimin oder Copolymere oder Derivate davon;
(F) 0-15 Gewichtsprozent Füll- und/oder Verstärkungsstoffe;
(G) 0-35 Gewichtsprozent Weichmacher;
(H) 0-5.0 Gewichtsprozent Additive, verschieden von (E), (F), (G) und (B);
wobei die Summe gebildet aus (B) und (E)-(H) 100 Gewichtsprozent der thermoplastischen Formmasse FM-2 ergibt. Die Formmasse FM-1 ist hierbei frei an Komponente (B).

Bevorzugt liegt das wenigstens eine Polyamid (A) der Formmasse FM-1 in einem Anteil von 31-79.5 Gewichtsprozent, besonders bevorzugt von 40-74 Gewichtsprozent, bezogen auf das Gesamtgewicht der Formmasse FM-1, vor, falls die Formmasse FM-1 die Komponente (B) enthält (erste bevorzugte Ausführungsform), oder bevorzugt in einem Anteil von 35-80 Gewichtsprozent, besonders bevorzugt von 43-74.8 Gewichtsprozent, bezogen auf das Gesamtgewicht der Formmasse FM-1, vor, falls die Formmasse FM-1 frei an Komponente (B) ist (zweite bevorzugte Ausführungsform).

Bevorzugt liegt das wenigstens eine olefinische und/oder vinylaromatische Polymer (E) der Formmasse FM-2 in einem Anteil von 51-94.4 Gewichtsprozent, besonders bevorzugt von 62-89 Gewichtsprozent, bezogen auf das Gesamtgewicht der Formmasse FM-2, vor, falls die Formmasse FM-2 die Komponente (B) enthält (zweite bevorzugte Ausführungsform), oder bevorzugt in einem Anteil von 55-94.9 Gewichtsprozent, besonders bevorzugt von 65-89.8 Gewichtsprozent, bezogen auf das Gesamtgewicht der Formmasse FM-2, vor, falls die Formmasse FM-2 frei an Komponente (B) ist (erste bevorzugte Ausführungsform).

Weiterhin ist bevorzugt, dass die Formmasse FM-2 als Komponente (E) wenigstens ein vinylaromatisches Polymer und gegebenenfalls wenigstens ein Polyolefin enthält. Dabei ist insbesondere bevorzugt, wenn die Formmasse FM-2 wenigstens 50 Gewichtsprozent, insbesondere wenigstens 70 Gewichtsprozent, jeweils bezogen auf die Gesamtmenge von (E), eines vinylaromatischen Polymers enthält.

Bevorzugt ist das wenigstens eine olefinische und/oder vinylaromatische Polymer (E) der Formmasse FM-2 ausgewählt aus der Gruppe bestehend aus: Styrol-Ethylen-Butylen-Styrol-Blockcopolymeren (SEBS), Styrol-Ethylen-Propylen-Styrol-Blockcopolymeren (SEPS), Styrol-Butylen-Styrol-Blockcopolymeren (SBS), Styrol-Styrol-Butylen-Styrol-Blockcopolymeren (SSBS), Polyethylen (PE), Polypropylen (PP), Polybutadien (PB), Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylen-vinylacetat) (EVA), Ethylen-Ethylacrylat-Copolymer (EEA), Ethylen-Hexen-Copolymer, Ethylene-Propylen-Dien-Terpolymere, sowie Mischungen aus diesen Polymermaterialien.

Des Weiteren ist bevorzugt, wenn das wenigstens eine olefinische und/oder vinylaromatische Polymer (E) der Formmasse FM-2 mit Carbonsäure- oder Carbonsäureanhydrid-Gruppen gepfropft ist, wobei die Pfropfung besonders bevorzugt mit Acrylsäure, Methacrylsäure oder Maleinsäureanhydrid erfolgt ist und/oder der Pfropfgrad bevorzugt 0.1 bis 4.0 Gewichtsprozent, besonderts bevorzugt 0.4 bis 2.5 Gewichtsprozent und insbesondere bevorzugt 0.5 bis 2.0 Gewichtsprozent, jeweils bezogen auf das gepfropfte Polymer (E), beträgt.

Bevorzugt sind die Polyamide der **Komponente (A)** teilkristalline acyclische aliphatische Polyamide, teilkristalline teilaromatische Polyamide, cycloaliphatische Polyamide, amorphe teilaromatische Polyamide oder Mischungen dieser Polyamide, insbesondere bevorzugt jeweils vom Typ AABB, d. h. aufgebaut aus Dicarbonsäuren und Diaminen, wobei zusätzlich auch noch in einem untergeordneten Anteil Lactame und Aminosäuren als Bauteile vorhanden sein können.

Als Diamine für Komponente (A) kommen z.B. folgende Monomere in Frage: 1,4-Butandiamin, 2-Methyl-1,5-pentandiamin, 2-Butyl-2-ethyl-1,5-pentandiamin, 1,6-Hexandiamin, 2,2,4-Trimethylhexamethylendiamin, 2,4,4-Trimethylhexamethylendiamin, 1,7-Heptandiamin, 1,8-Octandiamin, 2-Methyl-1,8-octandiamin, 1,9-Nonandiamin, 1,10-Decandiamin, 1,11-Undecandiamin, 1,12-Dodecandiamin, 1,13-Tridecandiamin, 1,14-Tetradecandiamin, m-Xylylendiamin und p-Xylylendiamin, wobei 1,6-Hexandiamin, 1,10-Decandiamin und 1,12-Dodecandiamin bevorzugt werden.

Als Dicarbonsäuren für Komponente (A) kommen z.B. folgende Monomere in Frage: Adipinsäure, Korksäure, Azelainsäure, Sebazinsäure, Undecandisäure, Dodecandisäure, Tridecandisäure, Tetradecandisäure, Pentadecandisäure, Hexadecandisäure, Heptadecandisäure, Oktadecandisäure, C36-Dimerfettsäure, cis- und/oder trans-Cyclohexan-1,4-dicarbonsäure und/oder cis- und/oder trans-Cyolohexan-1,3-dicarbonsäure (CHDA), Terephthalsäure, Isophthalsäure, Naphthalindicarbonsäure, insbesondere 1,5-Naphthalindicarbonsäure und 2,6-Naphthalindicarbonsäure, und Gemische daraus. Bevorzugt werden Adipinsäure, Sebazinsäure, Tetradecandisäure, Hexadecandisäure, und Dodecandisäure.

Weiterhin können die Polyamide (A) auch Lactame oder Aminocarbonsäuren, insbesondere α,ω-Aminosäuren oder Lactame mit 6 bis 12 Kohlenstoffatomen enthalten, wobei beispielhaft nachfolgende Auswahl genannt sei: m-Aminobenzoesäure, p-Aminobenzoesäure, Caprolactam (CL), α,ω-Aminocapronsäure, α,ω-Aminoheptansäure, α,ω-Aminooctansäure, α,ω-Aminononansäure, α,ω-Aminodecansäure, α,ω-Aminoundecansäure (AUA), Laurinlactam (LL) und α ,ω-Aminododecansäure (ADA). Besonders bevorzugt sind Caprolactam, Aminocapronsäure, α,ω-Aminoundecansäure, Laurinlactam und α,ω-Aminododecansäure. Der Anteil dieser Lactame respektive Aminosäuren liegt aber bevorzugt bei weniger als 50 Gewichtsprozent bezogen auf die Gesamtmasse des Polyamides (A), insbesondere bevorzugt bei weniger als 20 Gewichtsprozent, besonders bevorzugt bei weniger als zehn Gewichtsprozent.

Bevorzugt als Komponente (A) sind die teilkristallinen acyclischen aliphatischen Polyamide (A1) ausgewählt aus der Gruppe bestehend aus: 46, 56, 66, 66/6, 69, 610, 612, 614, 616, 618, 810, 1010, 1012, 1014, 1016, 1212, 11, 12, 6/12, 66/6/610, wobei 66, 610, 612, 614 und 616 besonders bevorzugt sind. Hierbei und im Folgenden ist z.B. die Bezeichnung "46" als Polyamid 46 oder in Kurzschreibweise als PA 46 zu verstehen.

Bevorzugt sind die teilkristallinen teilaromatischen Polyamide (A2) der Komponente (A) ausgewählt aus der Gruppe bestehend aus: 6T/6I, 6T/66, 6T/6I/66, 6T/610, 6T/612, 6T/614, 6T/616, 9T, 9MT (M=2-Methyloctan-1,8-diamin), 10T, 12T, 10T/6T, 11/10T, 12/10T, 11/9T, 12/9T, 10T/1010, 10T/106, 10T/612, wobei der Anteil an Terephthalsäure bezogen auf den gesamten Gehalt an Dicarbonsäuren, bevorzugt mehr als 30 mol-%, insbesondere bevorzugt mehr als 50 mol-% ausmacht.

Weiterhin bevorzugt sind die Polyamide der Komponente (A) ausgewählt aus der Gruppe bestehend aus den cycloaliphatischen Polyamiden (A3): MACM12/PACM12, MACM14/PACM14, MACM16/PACM16, MACM18/PACM18, 61/6T/MACMI/MACMT/12, 6I/6T/612/MACMI/MACMT/MACM12, 6I/6T/614/MACMI/MACMT/MACM14, 61/6T/616/MACMI/MACMT/MACM16, 6I/MACMI/MACMT, 6I/PACMI/PACMT, MACMI/MACMT/12, 6I/6T/MACMI, MACMI/MACM36, 12/PACMI, 12/MACMT, 6I/PACMT, 6/IPDT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12, oder Mischungen davon.

Als Komponente (A) können auch amorphe teilaromatische Polyamide (A4) verwendet werden, welche bevorzugt ausgewählt sind aus der Gruppe bestehend aus MXDI, MXDI/6I, MXD6/MXDI, 5I, 5T/5I, 6I, 6/6I, 6T/6I, 10T/10I, 3-6T (3-6 = 2,2,4- bzw. 2,4,4-Trimethylhexandiamin) oder Mischungen davon, wobei die Systeme 5T/5I, 6T/6I oder 10T/10I einen Anteil von weniger als 50 Mol-% 5T-, 6T- bzw. 10T-Einheiten aufweisen, und wobei ein Zusammensetzungsbereich 5T:5I, 6T:6I bzw. 10T/10I von 20:80 bis 45:55, insbesondere 25:75 bis 40:60 bevorzugt wird.

Die Diamine für die cycloaliphatischen Polyamide (A3) sind dabei bevorzugt ausgewählt aus der Gruppe bestehend aus Bis-(4-amino-3-methyl-cyclohexyl)-methan (MACM), Bis-(4-aminocyclohexyl)-methan (PACM), Bis-(4-amino-3-ethyl-cyclohexyl)-methan (EACM), Bis-(4-amino-3,5-dimethyl-cyclohexyl)-methan (TMDC), 2,6-Norbornandiamin (2,6-Bis-(aminomethyl)-norbornan), 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan, meta-Xylylendiamin, para- Xylylendiamin und Mischungen daraus. Besonders bevorzugt sind die Diamine ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Dicarbonsäuren für die cycloaliphatischen Polyamide Komponente (A3) sind bevorzugt ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus. Besonders bevorzugt sind 1,6-Hexandisäure, 1,10-Decandisäure, 1,12-Dodecandisäure, Terephthalsäure, Isophthalsäure und Mischungen hiervon. Weiterhin sind Capro- und Laurinlactam bevorzugte Monomere für die Herstellung der cycloaliphatischen Polyamide der Komponente (A3).

Die cycloaliphatischen Polyamide (A3) und die amorphen teilaromatischen Polyamide (A4) verfügen bevorzugt über einen Glasübergangspunkt Tg oberhalb von 90°C, bevorzugt oberhalb von 110°C, insbesondere bevorzugt oberhalb von 120°C.

Bevorzugt verfügen die Polyamide (A1) und (A2) über einen Schmelzpunkt von wenigstens 170 °C, vorzugsweise im Bereich von 180-340 °C oder, vorzugsweise wenn aliphatisch (d.h. Komponente A1), im Bereich von 180 - 230 °C.

Weiterhin bevorzugt verfügen die Polyamide der Komponente (A), insbesondere die Polyamide (A1), (A2), (A3) und (A4), über eine relative Viskosität gemessen in m-Kresol (0,5 Gew.-%, 20°C) im Bereich von 1,4 bis 3.0, bevorzugt im Bereich von 1,45 bis 2.70, insbesondere im Bereich von 1,50 bis 2.40.

In einer weiteren Ausführungsform ist es besonders bevorzugt, dass das wenigstens eine Polyamid (A) der Formmasse FM-1 folgende Komponenten enthält oder aus den folgenden Komponenten besteht:
20-100 Gewichtsprozent, vorzugsweise 40-80 Gewichtsprozent wenigstens eines teilkristallinen acyclischen aliphatischen Polyamids (A1) und/oder wenigstens eines teilaromatischen teilkristallinen Polyamids (A2);
0-80 Gewichtsprozent, vorzugsweise 20-60 Gewichtsprozent wenigstens eines cycloaliphatischen Polyamids (A3) und/oder eines amorphen teilaromatischen Polyamids (A4),
wobei sich die Gewichtsprozente der Komponenten (A1) bis (A4) auf 100 Gewichtsprozent der Komponente (A) ergänzen.

In einer ebenfalls besonders bevorzugten Ausführungsform des Verbundes enthält das wenigstens eine Polyamid (A) der Formmasse FM-1 folgende Komponenten oder besteht aus den folgenden Komponenten:
(A1) 20-80 Gewichtsprozent, vorzugsweise 25-75 Gewichtsprozent wenigstens eines teilkristallinen acyclischen aliphatischen Polyamids ausgewählt aus der Gruppe bestehend aus PA66, PA610, PA612, PA614 und PA616;
(A4) 20-80 Gewichtsprozent, vorzugsweise 25-75 Gewichtsprozent wenigstens eines amorphen teilaromatischen Polyamids ausgewählt aus der Gruppe bestehend aus 5T/5I, 6T/6I und 10T/10I,
wobei sich die Gewichtsprozente der Komponenten (A1) und (A4) auf 100 Gewichtsprozent der Komponente (A) ergänzen.

Die Formmasse FM-1 enthält bevorzugt keine olefinischen/vinylaromatischen Polymere weder in gepfropfter noch ungepfropfter From, d.h. die Formmasse FM-1 ist bevorzugt frei an Komponente (E).

Die Formmasse FM-2 enthält als **Komponente (E)** wenigstens ein olefinisches und/oder vinylaromatisches Polymer. D.h. Komponente (E) kann wenigstens ein olefinisches Polymer oder wenigstens ein vinylaromatisches Polymer oder eine Kombination von wenigstens einem olefinischen und wenigstens einem vinylaroamtischen Polymer umfassen. Beim olefinischen Polymer handelt es sich um Homo- oder Co-Polyolefine, insbesondere bevorzugt um Polymere auf Basis von Ethylen, Propylen und Butylen oder deren Copolymere sowie Copolymere mit weiteren α-olefinischen Monomeren, insbesondere 1-Penten, 1-Hexen, 1-Hepten, 1-Octen und 1-Decen. Beim vinylaromatischen Polymer handelt es sich bevorzugt um Copolymere des Styrols mit anderen Monomeren, die mindestens eine olefinische Doppelbindung besitzen, wie z.B. die α-Olefine Ethylen, Propylen und Butylen oder Acrylsäure oder Acrylsäureester oder Butadien. Besonders bevorzugt sind Blockcopolymere mit wenigstens einem Block gebildet aus vinylaromatischen Monomeren (Block-A) und wenigstens einem Block gebildet aus olefinischen Monomeren (Block-B), wie sie beispielsweise in Styrolblockcopolymeren enthalten sind. Weiterhin bevorzugt sind auch Mischungen aus Styrolblockcopolymeren und Polyolefinen.

Die olefininschen und/oder vinylaromatischen Polymere, die als Bestandteil der Komponente (E) verwendet werden, können einen Naturkautschuk, Polybutadien, Polyisopren, Polyisobutylen, ein Mischpolymerisat des Butadiens und/oder Isoprens mit Styrol oder Styrolderivaten und anderen Comonomeren, ein hydriertes Mischpolymerisat und oder ein Mischpolymerisat, das durch Pfropfen oder Copolymerisation mit Säureanhydriden, (Meth)acrylsäure und deren Ester entstanden ist, sein oder enthalten. Die Polymere (E) können auch ein Pfropfkautschuk mit einem vernetzten elastomeren Kern, der aus Butadien, Isopren oder Alkylacrylaten besteht und eine Pfropfhülle aus Polystyrol hat, ein unpolares oder polares Olefinhomo- und Copolymeres wie Ethylen-Propylen-, Ethylen-Propylen-Dien- und Ethylen-Octen- oder Ethylen-Vinylacteat-Kautschuk oder ein unpolares oder polares Olefinhomo- und Copolymeres, das durch Pfropfen oder Copolymerisation mit Säureanhydriden, (Meth)acrylsäure und deren Ester entstanden ist, sein. Die Polymere (E) können auch ein carbonsäure-funktionalisiertes Copolymeres wie Poly(ethen-co-(meth)acrylsäure) oder Poly(ethen-co-1-olefin-co-(meth)acrylsäure) sein, wobei das 1-Olefin ein Alken oder ein ungesättigter (Meth)acrylsäureester mit mehr als 4 Atomen ist, einschliesslich solchen Copolymeren, in denen die Säuregruppen teilweise mit Metallionen neutralisiert sind.

Bevorzugt basieren die Polymere (E) auf Styrolmonomeren (Styrol und Styrolderivate) und anderen vinylaromatischen Monomeren und sind als Blockcopolymere aufgebaut aus alkenylaromatischen Verbindungen und einem konjungierten Dien sowie hydrierte Blockcopolymere aus einer alkenylaromatischen Verbindung und konjungierten Dienen oder Kombinationen dieser Polymer-Typen. Das Blockcopolymer enthält mindestens einen Block abgeleitet von einer alkenylaromatischen Verbindung (Block-A) und wenigstens einem Block abgeleitet von einem konjungierten Dien (Block-B). Bei den hydrierten Blockcopolymeren wurde der Anteil an aliphatisch ungesättigten Kohlenstoff-Kohlenstoff-Doppelbindungen durch Hydrierung reduziert. Als Blockcopolymere sind Zwei-, Drei-, Vier- und Multiblockcopolymere mit linearer Struktur geeignet. Jedoch sind verzweigte und sternförmige Strukturen ebenfalls erfindungsgemäss einsetzbar. Verzweigte Blockcopolymere erhält man in bekannter Weise, z.B. durch Pfropfreaktionen von polymeren "Seitenästen" auf eine Polymer-Hauptkette.

Als alkenylaromatische Monomere können neben oder in Mischung mit Styrol, auch vinylaromatische Monomere verwendet werden, die am aromatischen Ring und/oder an der C=C-Doppelbindung mit C1-20-Kohlenwasserstoffresten oder Halogenatomen substituiert sind. Beispiele für bevorzugte alkenylaromatische Monomere sind Styrol, p-Methylstyrol, α-Mothylstyrol, Ethylstyrol, tert.-Butylstyrol, Vinyltoluol, 1,2-Diphenylethylen, 1,1-Diphenylethylen, Vinylxylole, Vinyltoluole, Vinylnaphthaline, Divinylbenzole, Bromstyrole, Chlorstyrole, sowie Kombinationen davon. Bevorzugt werden Styrol, p-Methylstyrol, α-Mothylstyrol und Vinylnaphthalin.

Als Dienmonomere kommen z.B. 1,3-Butadien, 2-Methyl-1,3-butadien, 2,3-Dimethyl-1,3-butadien, 1,3-Pentadien, 1,3-Hexadien, Isopren, Chloropren und Piperylen in Betracht. 1,3-Butadien und Isopren sind bevorzugt, insbesondere 1,3-Butadien (nachfolgend kurz als Butadien bezeichnet).

Bevorzugt wird als alkenylaromatisches Monomer Styrol und als Dienmonomer Butadien, d.h. bevorzugt sind Styrol-Butadien-Blockcopolymere. In der Regel werden diese Blockcopolymere durch anionische Polymerisation in an sich bekannter Weise hergestellt.

Weiterhin können zusätzlich zu den Styrol- und Dienmonomeren weitere Comonomere mitverwendet werden. Der Anteil der Comonomeren beträgt bevorzugt 0 bis 50, besonders bevorzugt 0 bis 30 und insbesondere 0 bis 15 Gew.-%, bezogen auf die Gesamtmenge der eingesetzten Monomeren. Geeignete Comonomere sind z.B. Acrylate, insbesondere C1-12-Alkylacrylate wie n-Butylacrylat oder 2-Ethylhexylacrylat, und die entsprechenden Methacrylate, insbesondere C1-12-Alkylmethacrylate wie Methylmethacrylat (MMA). Weitere mögliche Comonomere sind (Meth)acrylnitril, Glycidyl(meth)acrylat, Vinylmethylether, Dially- und Divinylether bifunktioneller Alkohole, Divinylbenzol und Vinylacetat.

Zusätzlich zum konjugierten Dien enthalten die hydrierten Blockcopolymere gegebenenfalls noch Anteile an niederen Kohlenwasserstoffen wie z.B. Ethylen, Propylen, 1-Buten, Dicyclopentadien oder nicht-konjugierte Diene. In den hydrierten Blockcopolymeren ist der Anteil der nicht reduzierten aliphatischen ungesättigten Bindungen, die aus dem Block-B resultieren, kleiner 50%, bevorzugt kleiner 25%, insbesondere kleiner 10%. Die aromatischen Anteile aus Block-A werden bevorzugt zu maximal 25% reduziert. Die hydrierten Blockcopolymere Styrol-(Ethylen-Butylen)-Zweiblock und Styrol-(Ethylen-Butylen)-Styrol-Dreiblock-Copolymere werden durch Hydrierung von Styrol-Butadien- und Styrol-Butadien-Styrol-Copolymeren erhalten.

Die Blockcopolymere bestehen bevorzugt zu 20 bis 90 Gew.-% aus Block-A, insbesondere zu 25 bis 60 Gew.-% aus Block-A. Das Dien kann in 1,2- oder in 1,4-Orientierungen in den Block-B eingebaut werden.

Die Molmasse der Blockcopolymere beträgt 5'000 bis 500'000 g/mol, bevorzugt 20'000 bis 300'000 g/mol, insbesondere 40'000 bis 200'000 g/mol.

Geeignete hydrierte Blockcopolymere sind die kommerziell erhältlichen Produkte, wie z.B. KRATON® (Kraton Polymers) G1650, G1651, und G1652 sowie TUFTEC® (Asahi Chemical) H1041, H1043, H1052, H1062, H1141 und H1272.

Beispiele für nicht-hydrierte Blockcopolymere sind Polystyrol-polybutadien, Polystyrol-poly(ethyen-propylen), Polystyrol-polyisopren, Poly(α-methylstyrol)-polybutadien, Polystyrene-polybutadienpolystyrol (SBS), Polystyrol-Poly(ethylene-propylen)-Polystyrol (SEPS), Polystyrol-polyisoprenpolystyrol und Poly(a-methylstyrol-polybutadiene-poly(α-methylstyrol), als auch Kombinationen davon.

Geeignete nicht-hydrierte Blockcopolymere, die kommerziell erhältlich sind, sind verschiedene Produkte mit dem Markennamen SOLPRENE® (Phillips), KRATON® (Shell), VECTOR® (Dexco) und SEPTON® (Kuraray).

Gemäss einer weiteren bevorzugten Ausführungsform sind die erfindungsgemässen Formmassen dadurch gekennzeichnet, dass die Komponente (E) ein Polyolefinhomopolymeres oder ein Ethylen-α-Olefin-Copolymeres, insbesondere bevorzugt ein EP- und/oder EPDM-Elastomer (Ethylen-Propylen-Kautschuk respektive Ethylen-Propylen-Dien-Kautschuk), enthält. So kann es sich beispielsweise um ein Elastomer handeln, welches basiert auf einem Ethylen-C3-12-α-Olefin-Copolymer mit 20 bis 96, bevorzugt 25 bis 85 Gew.-% Ethylen, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und es sich insbesondere bevorzugt bei der Komponente (E) um Ethylen-Propylen-, Ethylen-Butylen-, Ethylen-Octen-Kautschuk und/oder LLDPE und/oder VLDPE handelt.

Alternativ oder zusätzlich (beispielsweise in Mischung) kann (E) ein Terpolymeres auf Basis von Ethylen-C3-12-α-Olefin mit einem unkonjugierten Dien enthalten, wobei dieses bevorzugtermassen 25 bis 85 Gew.-% Ethylen und bis maximal im Bereich von 10 Gew.-% eines unkonjugierten Diens enthält, wobei es sich insbesondere bevorzugt bei dem C3-12-α-Olefin um ein Olefin ausgewählt aus der Gruppe Propen, 1-Buten, 1-Penten, 1-Hexen, 1-Octen, 1-Decen und/oder 1-Dodecen handelt, und/oder wobei das unkonjugierte Dien bevorzugt ausgewählt ist aus der Gruppe Bicyclo(2.2.1)heptadien, Hexadien-1.4, Dicyclopentadien und/oder insbesondere 5-Ethylidennorbornen.

Bevorzugt verfügt die Komponente (E) über Bestandteile mit Carbonsäure- oder Carbonsäureanhydridgruppen, die durch thermische oder radikalische Reaktion des Hauptkettenpolymers mit einem ungesättigten Dicarbonsäureanhydrid, einer ungesättigten Dicarbonsäure oder einem ungesättigten Dicarbonsäuremonoalkylester, wobei dafür Reagenzien ausgewählt aus der folgenden Gruppe bevorzug eingesetzt werden: Acrylsäure, Maleinsäure, Maleinsäureanhydrid, Maleinsäuremonobutylester, Fumarsäure, Aconitsäure und/oder Itaconsäureanhydrid.

Vorzugsweise werden 0.1 bis 4.0 Gew.-% eines ungesättigten Anhydrids oder einer ungesättigten Dicarbonsäure an die Polymere (E) aufgepfropft. Generell ist der Pfropfgrad bevorzugtermassen in einem Bereich von 0.4-2.5%, insbesondere bevorzugt in einem Bereich von 0.5-2.0%.

Auch möglich als Bestandteil der Komponente (E) ist eine Mischung aus einem Ethylen-Propylen-Copolymer und einem Ethylen-Butylen-Copolymer, dies mit einem Maleinsäureanhydrid-Pfropfgrad (MAH-Propfgrad) im Bereich von 0.4-2.5 Gew.-%.

Die elastomeren Polyolefine können statistische, alternierende oder segmentierte Copolymere mit linearer, verzweigter oder Core-Shell-Struktur sein und enthalten bevorzugt funktionelle Gruppen und schliessen damit Homopolymere oder Copolymere von Olefinen, wie z.B. Ethylen, Propylen, Buten-1, oder Copolymere von Olefinen und copolymerisierbaren Monomeren, wie Vinylacetat, (Meth)acrylsäureester und Methylhexadien, ein.

Beispiele für kristalline Olefinpolymere sind niedrig-, mittel- und hochdichte Polyethylene, Polypropylen, Polybutadien, Poly-4-methylpenten, Ethylen-Propylen-Block- oder statistische Copolymere, Ethylen-Methylhexadien-Copolymere, Propylen-Methylhexadien-Copolymere, Ethylen-Propylen-Buten-Copolymere, Ethylen-Propylen-Hexen-Copolymere, Ethylen-Propylen-Methylhexadien-Copolyrnere, Poly(ethylen-vinylacetat) (EVA), Poly(ethylen-ethylacrylat) (EEA), Ethylen-Octen-Copolymer, Ethylen-Buten-Copolymer, Ethylen-Hexen-Copolymer, Ethylene-Propylen-Dien-Terpolymere sowie Kombinationen der genannten Polymere.

Bevorzugt wird auch ein lonomer, in welchem die polymergebundenen Carboxylgruppen ganz oder teilweise durch Metallionen miteinander verbunden sind.

Besonders bevorzugt sind durch Pfropfen mit Maleinsäureanhydrid funktionalisierte Mischpolymerisate des Butadiens mit Styrol, unpolare oder polare Olefinhomo- und Copolymere, die durch Pfropfen mit Maleinsäureanhydrid entstanden sind und carbonsäurefunktionalisierte Copolymere wie Poly(ethen-co-(meth)arylsäure) oder Poly(ethen-co-1-olefin-co-(meth)acrylsäure), in denen die Säuregruppen teilweise mit Metallionen neutralisiert sind.

Die Polymere (E) sind vorteilhaft ausgewählt aus der Gruppe bestehend aus: Styrol-Ethylen-Butylen-Styrol-Blockcopolymeren (SEBS), Styrol-Ethylen-Propylen-Styrol-Blockcopolymeren (SEPS), Styrol-Butylen-Styrol-Blockcopolymeren (SBS), Styrol-Styrol-Butylen-Styrol-Blockcopolymeren (SSBS), Ethylen/Propylen-Copolymeren, Ethylen/Propylen/Dien-Copolymeren (EPDM), Polyethylen (PE), Polypropylen (PP), Polybutadien (PB), Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylen-vinylacetat) (EVA), Ethylen-Ethylacrylat-Copolymer (EEA), Ethylen-Hexen-Copolymer, Ethylene-Propylen-Dien-Terpolymere, sowie Mischungen aus diesen Polymermaterialien. Besonders bevorzugt sind diese Polymere (E) gepfropft mit Acrylsäure, Methacrylsäure oder Maleinsäureanhydrid, wobei der Pfropfgrad 0.1 bis 4.0 Gewichtsprozent bezogen auf das gepfropfte Polymer (E) beträgt.

Besonders bevorzugt als vinylaromatisches Polymer der Komponente (E) ist Styrol-Ethylen/Butylen-Styrol-Copolymer (SEBS) und/oder mit Maleinsäureanhydrid (MAH) gepfropftes SEBS (SEBS-g-MAH). SEBS und SEBS-g-MAH enthalten bevorzugt jeweils 20 bis 70 Gew.-% Styrol. Dabei weist SEBS-g-MAH bevorzugt eine Schmelze-Volumenfließrate (MVR) bei 275 °C und einer Belastung von 5 kg von mindestens 80 ml/10 min, bevorzugt 90 bis 200 ml/10 min, besonders bevorzugt 100 bis 160 ml/10 min auf. Der Gehalt an Maleinsäureanhydrid im SEBS-g-MAH beträgt bevorzugt 0.1 bis 4.0 Gew.-%, weiter bevorzugt 0.4 bis 2.5 Gew.-% und besonders bevorzugt 0,5 bis 2.0 Gew.-%.

Besonders bevorzugt als olefinisches Polymer der Komponente (E) sind Polyethylen (PE), Polypropylen (PP), Ethylen-Propylen-Copolymere (EP), Ethylen-Butylen-Copolymere (EB), sowie die mit Maleinsäureanhydrid (MAH) oder Acrylsäure (AA) gepfropften Modifikate PE-g-MAH, PE-g-AA, PP-g-MaH, PP-g-AA, EP-g-MAH, EP-g-AA, EB-g-MAH, EB-g-AA sowie Mischungen davon. Der Gehalt an Acrylsäure oder an Maleinsäureanhydrid im PE-g-MAH, PE-g-AA, PP-g-MAH, PP-g-AA, EP-g-MAH, EP-g-AA, EB-g-MAH und EB-g-AA beträgt bevorzugt 0.1 bis 4.0 Gew.-%, weiter bevorzugt 0.4 bis 2.5 Gew.-% und besonders bevorzugt 0,5 bis 2.0 Gew.-%.

Komponente (E) setzt sich bevorzugt auch aus Mischungen der genannten vinylaromatischen und olefinischen Polymere zusammen, insbesondere sind die Mischungen aus SEBS-g-MAH und PP, SEBS und PP-g-MAH und SEBS-g-MAH und PP-g-MAH bevorzugt, wobei der Gehalt an Maleinsäureanhydrid im PP-g-MAH und/oder SEBS-g-MAH bevorzugt 0.1 bis 4.0 Gew.-%, weiter bevorzugt 0.4 bis 2.5 Gew.-% und besonders bevorzugt 0,5 bis 2.0 Gew.-% beträgt.

Die oben angegebenen möglichen Systeme für die Komponente können auch in Mischungen verwendet werden.

Erfindungsgemäss umfasst die Formmasse FM-1 oder FM-2 einen bestimmten Anteil von Polyethylenimin als **Komponente (B).** Bevorzugt liegt der Anteil der Komponente (B) in den Formmassen FM-1 oder FM-2 im Bereich von 0.5-4.0 Gewichtsprozent, vorzugsweise im Bereich von 0.8-3.0 Gewichtsprozent. Bevorzugt enthält nur die Formmasse FM-1 Polyethylenimin als Komponente (B) in den angegebenen Mengen und die Formmasse FM-2 ist frei an Komponente (B).

Unter Polyethyleniminen der Komponente (B) im Sinne der vorliegenden Erfindung werden Polymere verstanden, in deren Hauptketten NH- oder N-Gruppen vorliegen, die voneinander jeweils durch zwei Methylen-Gruppen getrennt sind und wie sie beispielhaft sie in Encycl. Polym. Sci. Eng. 1, 680-739 beschrieben werden. Im Sinne der Erfindung werden sowohl Homo- als auch Copolymerisate sowie deren Derivate umfasst. Bevorzugt werden verzweigte Polyethylenimine verwendet.

Die Homopolymerisate sind im Allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen, bestimmt mittels ¹³C-NMR Spektroskopie, beträgt vorzugsweise für das Verhältnis von primären zu sekundären zu tertiären Aminogruppen im Bereich von 1:0.7:0.5 bis 1:1,5:1, insbesondere 1:0.8:0.6 bis 1:1.2:0.8.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentriamin, Diehexamethylentriamin, Aminopropylethylendiamin und Bisaminopropylethylendiamin.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind.

Ausserdem eignen sich alkoxylierte Polyethylenimine, die beispielsweise durch Umsetzung von Polyethylenimin mit Ethylenoxid und/oder Propylenoxid erhältlich sind. Als weitere geeignete erfindungsgemässe Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden.

Polyethylenimine weisen üblicherweise ein gewichtsmittleres Molekulargewicht (Gewichtmittel) Mw von 600 bis 3'000'000, vorzugsweise 700 bis 2'000'000 auf. Das bevorzugte Mw beträgt 800 bis 50'000, insbesondere von 1'100 bis 25'000. Das gewichtsmittlere Molekulargewicht Mw wird bestimmt mittels Lichtstreuung gemäss ASTM D4001.

Das Polyethylenimin der Komponente (B) kann ein verzweigtes Polyethylenimin sein mit einer zahlenmittleren Molmasse Mn im Bereich von 500 - 50.000 oder 500 - 25.000 g/mol, vorzugsweise im Bereich von 1000 - 2500 oder 600-2000 g/mol.

Beim Polyethylenimin der Komponente (B) handelt es sich bevorzugt um ein verzweigtes Polyethylenimin, das insbesondere ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist.

Bevorzugt ist das Polyethylenimin der Komponente (B) ein verzweigtes Polyethylenimin mit einem Gehalt an primären Amino-Endgruppen im Bereich von 5000-20.000 µeq/g (mmol/kg), vorzugsweise im Bereich von 7.000-12.000 µeq/g (mmol/kg).

Beim Polyethylenimin der Komponente (B) handelt es sich weiterhin bevorzugt um ein verzweigtes Polyethylenimin mit einem Wassergehalt von weniger als 4 Gewichtsprozent, bevorzugt von weniger als 3 Gewichtsprozent, insbesondere bevorzugt von weniger als 2 Gewichtsprozent.

Zusätzlich können die vorgeschlagenen Formmassen FM-1 und FM-2 neben dem Polyamid bzw. olefinischen/vinylaromatischen Polymer und dem Polyethylenimin Zuschlagstoffe in Form von Füllstoffen und/oder Verstärkungsstoffen enthalten, und zwar als **Komponente (C) bzw. (F).** In der Formmasse FM-1 liegt die Komponente (C) bevorzugt in einem Anteil im Bereich von 20-60 Gewichtsprozent, vorzugsweise im Bereich von 25-55 Gewichtsprozent vor. In der Formmasse FM-2 liegt die Komponente (F) bevorzugt in einem Anteil im Bereich von 0-10 Gewichtsprozent, vorzugsweise ist die Formmasse FM-2 frei an Komponente (F). Weiterhin bevorzugt ist die Formmasse FM-2 frei an faserförmigen Verstärkungsstoffen (F2).

Bevorzugt bestehen dabei die Komponenten (C) und (F) aus:
Partikulärem Füllstoff (C1) bzw. (F1), insbesondere bevorzugt ausgewählt aus der Gruppe bestehend aus: Russ, Talk, Glimmer, Silikate, Quarz, Wollastonit, Kaolin, Kieselsäuren, Magnesiumcarbonat, Magnesiumhydroxid, Kreide, gemahlenes oder gefälltes Calciumcarbonat, Kalk, Feldspat, anorganische Pigmente, einschliesslich Bariumsulfat, Zinkoxid, Zinksulfid, Lithopone, Titandioxid (Rutil, Anatas), Eisenoxid, Eisenmanganoxid, Metalloxide, insbesondere Spinelle, einschliesslich Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente einschliesslich Titan-Zink-Rutil, Nickel-Antimon-Titanat, Chrom-Antimon-Titanat, hart- oder weichmagnetische Metalle oder Legierungen bzw. Keramiken, hohlkugelige Silikatfüllstoffe, Aluminiumoxid, Bornitrid, Borcarbid, Aluminiumnitrid, Calciumfluorid, sowie weiteren anorganischen Pigmenten und Mischungen hiervon;
   und/oder
faserförmigem Verstärkungsstoff (C2) bzw. (F2), bevorzugt ausgewählt aus der Gruppe bestehend aus: Glasfasern, Kohlenstoffasern, Graphitfasern, Aramidfasern, Nanotubes oder Mischungen davon, wobei die Fasern der Komponente (C2) und (F2) mit kreisförmiger oder nicht-kreisförmiger Querschnittsfläche vorliegen können.

Die Füllstoffe (C1) und (C2) sowie (F1) und (F2) können auch oberflächenbehandelt sein.

Bevorzugt handelt es sich bei den Komponenten (C2) und (F2) um eine Glasfaser, die im Wesentlichen aus den Komponenten Siliciumdioxid, Calciumoxid, Magnesiumoxid und Aluminiumoxid aufgebaut ist oder besteht und das Gewichtsverhältnis SiO₂/(CaO+MgO) kleiner 2.7, bevorzugt kleiner 2.5 und insbesondere zwischen 2.1 und 2.4 ist. Insbesondere handelt es sich bei Komponente (C2) bzw. (F2) um eine E-Glasfaser gemäss ASTM D578-00. Erfindungsgemäss kann es sich bei der Glasfaser (Komponenten C2, F2) auch um eine hochfeste Glasfaser handeln, die vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid beruht, wobei eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) bevorzugt wird. Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente (C2) sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Glasfasern der Komponenten (C2) und (F2) können in Form von Kurzfasern, bevorzugt in Form von Schnittglas mit einer Länge im Bereich von 0.2 bis 20 mm, oder in Form von Endlosfasern (Rovings) vorliegen.

Die erfindungsgemässen Glasfasern der Komponenten (C2) und (F2) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 µm, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Bei den flachen Glasfasern der Komponenten (C2) und (F2), also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzug überwiegt, d.h. mehr als 50 Gew.-% der Gesamtmasse der Fasern ausmacht.

Die erfindungsgemässen Glasfasern sind bevorzug mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponenten (C2) und (F2) als Roving eingesetzten E-Glasfasern oder hochfesten Glasfasern weisen bevorzugt einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponenten (C2) und (F2), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

Zu guter Letzt kann die vorgeschlagene Formmassen FM-1 auch noch Additive als **Komponente (D)** und die Formmasse FM-2 auch noch Additive als **Komponente (H)** enthalten. Die Komponente (D) liegt für die Formmasse FM-1 bevorzugt in einem Anteil im Bereich von 0.1-4.0 Gewichtsprozent, vorzugsweise im Bereich von 0.2-2.0 Gewichtsprozent vor. Die Komponente (H) liegt für die Formmasse FM-2 bevorzugt in einem Anteil im Bereich von 0.1-4.0 Gewichtsprozent, vorzugsweise im Bereich von 0.2-2.0 Gewichtsprozent vor.

Die Additive der Komponenten (D) und (H) können ausgewählt sein aus der Gruppe bestehend aus: Stabilisatoren, Alterungsschutzmittel, Antioxidantien, Antiozonantien, Lichtschutzmittel, UV-Stabilisatoren, UV-Absorber, UV-Blocker, anorganische Hitzestabilisatoren, insbesondere auf Basis von Kupferhalogeniden und Alkalihalogeniden und/oder Verbindungen der Lanthanoiden, organische Hitzestabilisatoren, Leitfähigkeitsadditive, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, organische und Farbstoffe, Markierungsstoffen und Mischungen hiervon.

Die Formmasse FM-2 kann weiterhin auch noch 0 - 35 Gewichtsprozent eines Weichmachers als Komponente (G) enthalten. Bevorzugt enthält die Formmasse FM-2 5-35 Gew.-%, besonders bevorzugt 10-33 Gew.-% eines Weichmachers. Bevorzugt wird als Komponente (G) ein Öl mit paraffinischen und/oder naphthenischen Anteilen eingesetzt, das vorzugsweise frei von aromatischen Anteilen ist. Dabei bezeichnet der Begriff "paraffinisch" acyclische, gesättigte Kohlenwasserstoffe während der Begriff "naphthenisch" cyclische gesättigte Kohlenwasserstoffe bezeichnet. Bevorzugt werden demnach Weichmacher (G) auf Basis aliphatischer Kohlenwasserstoffe, insbesondere acyclischer und/oder cyclischer aliphatischer Kohlenwasserstoffe. In der Regel liegt ein Gemisch paraffinischer und/oder naphthenischer Kohlenwasserstoffe vor, die flüssig, ölig, pastös oder fest sein können. Bevorzugt werden paraffinische Öle, die je nach Viskosität und Schmelzpunkt in flüssige Paraffine (*Paraffinum perliquidum*), ölige oder pastöse Paraffine (*Paraffinum subliquidum*) und feste Paraffine (*Paraffinum solidum*) unterschieden werden. Besonders bevorzugt ist Paraffinum Perliquidum.

In einer bevorzugten Ausführungsform des Verbundes besteht die erfindungsgemässe thermoplastische Polyamid-Formmasse FM-1 aus:
(A) 40-74 Gewichtsprozent der Komponente (A) bestehend aus:
   20-100 Gewichtsprozent, vorzugsweise 40-80 Gewichtsprozent wenigstens eines teilkristallinen acyclischen aliphatischen Polyamids (A1) und/oder wenigstens eines teilaromatischen teilkristallinen Polyamids (A2);
   0-80 Gewichtsprozent, vorzugsweise 20-60 Gewichtsprozent wenigstens eines amorphen teilaromatischen Polyamids (A4) und/oder wenigstens eines cycloaliphatischen Polyamids (A3),
   wobei sich die Gewichtsprozente der Komponenten (A1) bis (A4) auf 100 Gewichtsprozent der Komponente (A) ergänzen;
(B) 0.8-3.0 Gewichtsprozent Polyethylenimin;
(C) 25-55 Gewichtsprozent Füll- und/oder Verstärkungsstoffe;
(D) 0.2-2.0 Gewichtsprozent Additive, verschieden von (A) - (C);
wobei die Summe gebildet aus (A)-(D) 100 Gewichtsprozent der thermoplastischen Polyamid-Formmasse ergibt, und die erfindungsgemässe thermoplastische Formmasse FM-2 besteht aus:
(E) 55-94.9 Gewichtsprozent wenigstens eines vinylaromatischen Polymers ausgewählt aus der Gruppe bestehend aus: Styrol-Ethylen-Butylen-Styrol-Blockcopolymeren (SEBS), Styrol-Ethylen-Propylen-Styrol-Blockcopolymeren (SEPS), Styrol-Butylen-Styrol-Blockcopolymeren (SBS), Styrol-Styrol-Butylen-Styrol-Blockcopolymeren (SSBS) und/oder wenigstens eines Polyolefins ausgewählt aus der Gruppe bestehend aus: Polyethylen, Polypropylen, Polybutadien, Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly(ethylen-vinylacetat) (EVA), Ethylen-Ethylacrylat-Copolymer (EEA), Ethylen-Hexen-Copolymer, Ethylene-Propylen-Dien-Terpolymere, besonders bevorzugt gepfropft mit Acrylsäure, Methacrylsäure oder Maleinsäureanhydrid, wobei der Pfropfgrad 0.1 bis 4.0 Gewichtsprozent bezogen auf das gepfropfte Polymer (E) beträgt;
(F) 0-10 Gewichtsprozent Füll- und/oder Verstärkungsstoffe;
(G) 5-35 Gewichtsprozent Weichmacher;
(H) 0.1-4.0 Gewichtsprozent Additive, verschieden von (E), (F) und (G);
wobei die Summe gebildet aus (E)-(H) 100 Gewichtsprozent der thermoplastischen Formmasse FM-2 ergibt.

Weiter betrifft die vorliegende Erfindung die Verwendung der thermoplastischen Formmassen FM-1 und FM-2, wie sie oben beschrieben wurden, zur Herstellung eines derartigen Verbundes. Der erfindungsgemässe Verbund kann durch Spritzguss oder Extrusion hergestellt werden.

Das erfindungsgemäße **Verfahren** zur Herstellung der oben erläuterten Verbunde beruht bevorzugt auf dem Spritzgiessen und umfasst folgende Stufen:
(i) Einlegen eines Formkörpers, enthaltend wenigstens einen Teilbereich (I) gebildet aus der Formmasse FM-1, in eine Spritzgussform oder Einspritzen der thermoplastischen Formmasse FM-1 in eine Spritzgussform zur Ausformung wenigstens eines Teilbereiches (I) und
(ii) Einspritzen der thermoplastischen Formmasse FM-2 zur Ausformung wenigstens eines Teilbereiches (II),
wobei die Schmelzen der Formmassen FM-1 und FM-2 parallel oder hintereinander ohne oder ohne wesentliche Vermischung in die Spritzgießform eingetragen werden, und wobei sich die Teilbereiche (I) und (II) mindestens in einem Punkt berühren.

Dabei bildet die Formmasse FM-2 im fertigen Spritzgussteil bevorzugt flächige Teilbereiche (II) aus, die bevorzugt an den schmalen Seitenflächen und/oder teilweise an Ober- oder Unterseite, besonders bevorzugt nur an den Seitenflächen, in Kontakt mit den durch die Formmasse FM-1 gebildeten Teilbereiche (I) stehen.

Im Rahmen der vorliegenden Beschreibung der Erfindung wird unter der Definition "ohne oder ohne wesentliche Vermischung" verstanden, dass die thermoplastischen Formmassen FM-1 und FM-2 für den Werkstoff-Verbund quasi pfropfenartig oder in parallelen Strömen in das Formwerkzeug eintreten.

Beim erfindungsgemässen Verfahren kann in Stufe (i) der Formkörper, welcher die Teilbereiche (I) umfasst, als unabhängig, mindestens teilweise aus der Formmasse FM-1 hergestellter Vorformling in die Spritzgießform eingesetzt werden. Nach einer alternativen Ausführungsform wird in Stufe (i) dieser Formkörper in der Spritzgießform hergestellt.

Dabei kann der Verbund in einem Spritzgießvorgang einstufig, also Stufe (i) und Stufe (ii) parallel, durchgeführt werden. Diese Vorgehensweise ist wegen ihrer Effektivität und Einfachheit vorteilhaft. Es ist im Rahmen der Erfindung jedoch auch möglich und in vielen Fällen vorteilhaft, in Stufe (i) in einem ersten Schritt die thermoplastische Formmasse FM-1 und in einem darauffolgenden zweiten Schritt (Stufe ii) die zweite thermoplastische Formmasse FM-2 in die Spritzgießform einzuspritzen. Bei der einstufigen Verfahrensweise können vorteilhaft ein einstufiges Standard-Sandwich-Spritzverfahren oder ein einstufiges Monosandwich-Verfahren angewandt werden, die dem Fachmann als solche geläufig sind.

Im Rahmen der Erfindung kann jedoch auch ein Mehrkanal-Sandwich-Spritzverfahren angewandt werden, bei dem die beiden Schmelzen der Formmassen FM-1 und FM-2
aus zwei getrennten Heißkanalsystemen in die Spritzgießform eingespritzt werden.

Beim Monosandwich-Verfahren wird die thermoplastische Formmasse FM-2 für die weiche Schicht aus einem einfachen Extruder in den Hauptzylinder eines Extruders, z.B. eines Schubschneckenextruders, vor das darin befindliche thermoplastische Formmasse FM-1 für die harte Schicht eingespritzt, wobei die Schnecke des Hauptzylinders zurückgefahren wird. Die im Hauptzylinder anordnungsmäßig und rheologisch hintereinander befindlichen Materialien werden dann in einem einzigen Spritzgießvorgang in die Form eingespritzt, wobei sich der erfindungsgemässe Verbund ausbildet.

Aus der Formmasse FM-1 kann der Formkörper mit den Teilbereichen (I) separat vorgefertigt oder in der gleichen Spritzgießform gewissermaßen in situ hergestellt werden.

Das Einlegeverfahren, bei dem ein separat vorgefertigter Formkörper mit den Teilbereichen (I) oder den Teilbereichen (II) in die Form eingelegt wird, eignet sich besonders für die Herstellung kleiner Stückzahlen oder von Trägern großer Abmessungen.

Wird der Teil des Verbundes mit den Teilbereichen (I) innerhalb des Spritzgussprozesses hergestellt, so wird vorteilhaft das Core-Back-Moulding-Verfahren angewandt. Bei diesem Verfahren wird ein Werkzeug verwendet, bei dem ein oder mehrere Schieber nach dem Spritzen des Vorformlings, also dem Formkörper mit den Teilbereichen (I) auf Basis der Formmasse FM-1, aus dem Werkzeug herausgezogen werden, um so den Hohlraum für die Teile des Verbundes aus Formmasse FM-2 zu schaffen. Die Vorrichtung wird auch als 'Mehrschieberwerkzeug' bezeichnet. Alternativ ist auch eine Herstellung des Trägers in einem Drehwerkzeug möglich.

Bei dem erfindungsgemäßen Verbund wird eine ausgezeichnete Haftung der Teilbereiche (II) mit den Teilbereichen (I) erzielt.

Ebenso betrifft die vorliegende Erfindung die Verwendung von Polyethylenimin oder eines Copolymeren oder Derivates davon in einem Verbund enthaltend Teilbereiche (I), gebildet aus einer Formmasse enthaltend Polyamid, und enthaltend Teilbereiche (II), gebildet aus einer Formmasse enthaltend olefinische/vinylaromatische Polymere, zur Verbesserung der Verbundhaftung zwischen diesen Teilbereichen (I) und (II). Auch hier ist das Polyethylenimin bevorzugt in der Polyamid-Formmasse in einem Anteil im Bereich von 0.5-4.0 Gewichtsprozent, vorzugsweise im Bereich von 0.8-3.0 Gewichtsprozent in der Formmasse, bezogen auf das Gesamtgewicht der Polyamid-Formmasse, vorhanden, und es handelt sich bevorzugt beim Polyethylenimin um ein verzweigtes Polyethylenimin, das vorzugsweise ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist.

Das Polyethylenimin ist weiter bevorzugt ein verzweigtes Polyethylenimin mit einer zahlenmittleren Molmasse Mₙ im Bereich von 500-50.000 oder 500 - 25.000 g/mol, vorzugsweise im Bereich von 600-2000 oder 1000 - 2500 g/mol.

Das Polyethylenimin kann bevorzugt die weiteren anderen Eigenschaften aufweisen, die weiter oben im Zusammenhang mit der thermoplastischen Polyamid-Formmasse bereits beschrieben wurden.

Bevorzugte Anwendungen für die Werkstoff-Verbunde sind: Autozündschlüssel, Funktionstasten bei Autozündschlüsseln, Fernbedienungen aller Art z.B. für Fernseher, Kräne und Laufkräne, Werkzeuggriffe bei diversen Zangen und Elektrohandwerkzeugen, Gehäusedichtungen zur Abdichtung gegen Feuchtigkeit und Wasser, Gehäuse mit flexibler Membran oder Dichtlippe, Elektroschalter mit flexibler Membranabdeckung, Elektrostecker mit wasserdichter Dichtlippe oder etc. Weitere Ausführungsformen sind in den abhängigen Ansprüchen angegeben.

### KURZE BESCHREIBUNG DER ZEICHNUNGEN

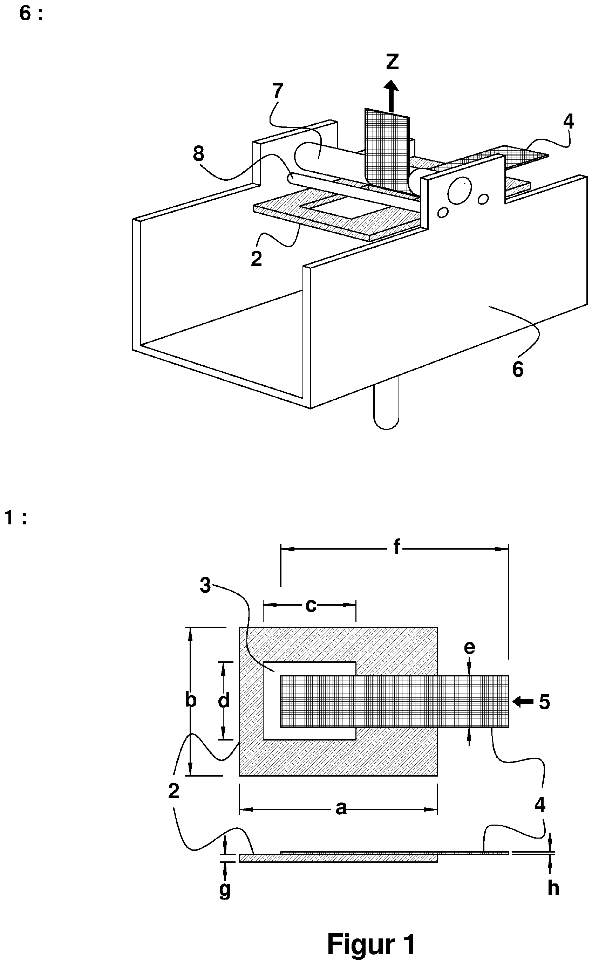

Die Zeichnungen in Fig. 1 zeigen den verwendeten Verbund-Prüfkörper sowie die Halterung für den Rollenschälversuch zur Messung der Schälkraft. Sie dienen lediglich zur Erläuterung und sind nicht einschränkend auszulegen.

| Bezugszeichenliste für Figur 1 | | | |
|---|---|---|---|
| 1 | Verbund-Prüfkörper | a | Seitenlänge von 2 |
| 2 | Rahmen, Teilbereich (I) | b | Breite von 2 |
| 3 | Öffnung im Rahmen | c | Seitenlänge von 3 |
| 4 | Lasche, Teilbereich (II) | d | Breite von 3 |
| 5 | Anguss-Seite Teilbereich (II) | e | Seitenlänge von 4 |
| 6 | Halterung für Rollenschälversuch | f | Breite von 4 |
| 7 | Umlenk-Rolle | g | Dicke von 2 |
| 8 | Fixier-Rollen | h | Dicke von 4 |
| Z | Zugachse | | |

### BESCHREIBUNG BEVORZUGTER AUSFÜHRUNGSFORMEN

### Herstellung der Polyamid-Formmassen FM-1

Die in der Tabelle 1 angegebenen Komponenten wurden in den in Tabellen 2 angegebenen Proportionen in einem zweiwelligen Extruder der Firma Werner und Pfleiderer mit einem Schneckendurchmesser von 25 mm bei vorgegebenen Prozessparametern (siehe Tabelle 3) compoundiert, wobei die Polyamidgranulate sowie die Zusatzstoffe in die Einzugszone dosiert wurden, während die Glasfaser über einen Sidefeeder 3 Gehäuseeinheiten vor der Düse in die Polymerschmelze dosiert wurde. Die Compounds zusammengefasst in Tabelle 2 wurden als Strang aus einer Düse mit 3 mm Durchmesser abgezogen und nach Wasserkühlung granuliert. Das Granulat wurde 24 Stunden bei 100°C im Vakuum von 30 mbar getrocknet.

**Tabelle 1: In den Beispielen und Vergleichsbeispielen verwendete Materialien**

| **Komponenten** | **Beschreibung** | **Hersteller** |
|---|---|---|
| Polyamid 1 (Komponente A1) | PA 66, η_{rel·} = 1,85, Tm = 260 °C | EMS-CHEMIE AG |
| Polyamid 2 (Komponente A1) | PA 610, η_{rel·} = 1.94 , Tm = 195 °C | EMS-CHEMIE AG |
| Polyamid 3 (Komponente A4) | PA 6I/6T (67:33), η_{rel·} = 1,52 , T_{g} = 125 °C | EMS-CHEMIE AG |
| Kraton G1651 E (Komponente E) | SEBS, Styrolgehalt = 31.5 Gew.-% | Shell |
| Kraton FG1901GT (Komponente E) | SEBS-g-MAH, Styrolgehalt = 30 Gew.-%, MAH-Gehalt = 1.5 Gew.-% | Shell |
| Polybond 3002 (Komponente E) | Polypropylen (PP-g-MAH), , Tₘ = 157 °C, MAH-Gehalt = 0.3 Gew.-% | Addivant |
| Polybond 3200 (Komponente E) | Polypropylen (PP-g-MAH), , Tₘ = 160 °C, MAH-Gehalt = 1.0 Gew.-% | Addivant |
| Admer QB 510E | Polypropylene (PP-g-MAH), MAH-Gehalt = 0.05 Gew.-% | Mitsui (JP) |
| Admer NF358E | LLDPE (PE-g-MAH), MAH-Gehalt = 0.2 Gew.-% | Mitsui (JP) |
| Glasfaser (Komponente C) | Vetrotex 995 EC10-4.5, E-Glas, Durchmesser = 10 µm, Länge = 4.5 mm, runder Querschnitt | Owens Corning Fiberglass (US) |
| Russ (Komponente D) | Black Pearls 1100, lodine absorption (g/kg): 20, OAN (cc/100g): 105 (ASTM D-2414) | Cabot Corp. (CH) |
| PEI (Komponente B) | Lupasol G20WFR, Polyethylenimin (CAS 25987-06-8), zahlenmittlere Molmasse Mₙ = 1200 g/mol, Wassergehalt höchstens 2 Gewichtsprozent, Verhältnis primäre/sekundäre/tertiäre Amine 1:0.91:0.64 | BASF SE (DE) |
| Stabilisierung (Komponente D) | Irganox 1010 (CAS 6683-19-8) | BASF SE |
| Weichmacher (Komponente G) | MERKUR WOP 240 PB Paraffinöl (Paraffinum Perliquidum) (CAS 8002-74-2) | Sasol (DE) |
| ηᵣₑₗ | Relative Viskosität bestimmt gemäss ISO 306, 0.5 g Polymergranulat in 100 ml m-Kresol, 20°C, für Polyamide 1 bis 5 | |
| MAH | Maleinsäureanhydrid | |
| T_{g}, Tₘ | Glasübergangstemperatur, Schmelztemperatur bestimmt gemäss ISO 11357 mit einer Aufheizrate von 20 °C/min | |

**Tabelle 2 : Formmassen FM-1 (B1, B2 und VB1 bis VB5) sowie Verbundhaftung zu Formmassen FM-2 (I) bis III)**

| **Komponenten** | **Einheit** | **B1** | **B2** | **VB1** | **VB2** | **VB3** | **VB4** | **VB5** |
|---|---|---|---|---|---|---|---|---|
| Polyamid 1 (Komponente A1) | Gew.-% | 43.9 | | 30.7 | 20.6 | 40.1 | 44.6 | |
| Polyamid 2 (Komponente A1) | Gew.-% | | 68.0 | | | | | 69.5 |
| Polyamid 3 (Komponente A4) | Gew.-% | 14.6 | | 10.2 | 6.9 | 13.4 | 14.9 | |
| Stabilisator | Gew.-% | 0.3 | 0.3 | 0.3 | 0.3 | 0.3 | 0.3 | 0.3 |
| Russ | Gew.-% | 0.2 | 0.2 | 0.2 | 0.2 | 0.2 | 0.2 | 0.2 |
| Polybond 3002 | Gew.-% | | | 18.6 | | | | |
| Admer QB 510E | Gew.-% | | | | 32.0 | | | |
| Admer NF358E | Gew.-% | | | | | 6.0 | | |
| Glasfaser | Gew.-% | 40.0 | 30.0 | 40.0 | 40.0 | 40.0 | 40.0 | 30.0 |
| PEI | Gew.-% | 1.0 | 1.5 | | | | | |

| **Eigenschaften** | | | | | | | | |
|---|---|---|---|---|---|---|---|---|
| Shore D | | 85 | 82 | 80 | 80 | 82 | 84 | 82 |
| E-Modul | MPa | 16'100 | 9'100 | 10'200 | 10'100 | 12'000 | 16'400 | 9'200 |
| Bruchspannung | MPa | 225 | 154 | 147 | 83 | 189 | 228 | 155 |
| Bruchdehnung | % | 2.0 | 3.9 | 2.1 | 1.5 | 3.0 | 2.0 | 4.0 |
| Schlagzähigkeit, Charpy, 23°C | kJ/m² | 66 | 88 | 41 | 22 | 87 | 72 | 90 |
| Kerbschlagzähigkeit, Charpy, 23°C | kJ/m² | 14 | 16 | 10 | 9 | 16 | 15 | 18 |

| Verbundhaftung zu Formmasse FM-2 (I) | | | | | | | | |
|---|---|---|---|---|---|---|---|---|
| 0d (48h, 23°C) | N | 122 | 127 | 28.1 | 19.9 | 24.2 | 108 | 111 |
| 2d, 70°C, 62% r.F. | N | 125 | 125 | 26.6 | 19.6 | 17.5 | 20.4 | 22.7 |
| 5d, 70°C, 62% r.F. | N | 117 | 122 | 21.1 | 19.1 | 11.2 | 16.2 | 15.1 |

| Verbundhaftung zu Formmasse FM-2 (II) | | | | | | | | |
|---|---|---|---|---|---|---|---|---|
| 0d (48h, 23°C) | N | 177 | | | | | 70.6 | |
| 2d, 70°C, 62% r.F. | N | 170 | | | | | 45.6 | |
| 5d, 70°C, 62% r.F. | N | 157 | | | | | 38.8 | |

| Verbundhaftung zu Formmasse FM-2 (III) | | | | | | | | |
|---|---|---|---|---|---|---|---|---|
| 0d (48h, 23°C) | N | 0 | | | | | | |

**Tabelle 3: Prozessparameter Compoundierung**

| **Parameter** | **Temperaturprofil [°C]** |
|---|---|
| Temperatur Zone 1 | 80-100 |
| Temperatur Zone 2 | 230-250 |
| Temperatur Zone 3 bis 10 | 250-260 |
| Temperatur Zone 11 | 250-270 |
| Temperatur Zone 12 | 230-270 |
| Temperatur Düsenkopfes | 260-280 |
| Schmelzetemperatur | 250-280 |
| Durchsatz [kg/h] | 10-12 |
| Schneckendrehzahl [U/min] | 150-200 |

Zur Bestimmung der mechanischen Eigenschaften wurden die Compounds mit einer Spritzgussmaschine Arburg Allrounder 320-210-750 zu Probekörpern bei definierten Zylindertemperaturen der Zonen 1 bis 4 von 240 bis 280 °C und einer Werkzeugtemperatur von 100 °C verspritzt.

### Herstellung der Formmasse FM-2

| | |
|---|---|
| Zusammensetzung (I): | 42.7 Gew.-% Kraton G1651 (SEBS) |
| | 24.0 Gew.-% Polybond 3200 (PP-g-MAH) |
| | 33.0 Gew.-% Weichmacher (Paraffinum Perliquidum) |
| | 0.3 Gew.-% Irganox HP2921 |
| Zusammensetzung (II): | 99.7 Gew.-% Kraton FG1901 GT (SEBS-g-MAH) |
| | 0.3 Gew.-% Irganox HP2921 |
| Zusammensetzung (III): | 42.7 Gew.-% Kraton G1651 (SEBS) |
| | 23.0 Gew.-% Polybond 3200 (PP-g-MAH) |
| | 33.0 Gew.-% Weichmacher (Paraffinum Perliquidum) |
| | 1.0 Gew.-% Lupasol G20 |
| | 0.3 Gew.-% Irganox HP2921 |

Die Komponenten wurden in den angegebenen Proportionen in einem zweiwelligen Extruder der Firma Werner und Pfleiderer mit einem Schneckendurchmesser von 25 mm bei einer mittleren Zonentemperatur von 200 bis 230 °C, einer Schneckendrehzahl von 250 Upm und einem Durchsatz von 8 kg/h compoundiert, wobei das SEBS, das PP sowie die Additve in die Einzugszone dosiert wurden, während der Weichmacher über eine Dosierpumpe durch eine Bohrung im Zylinder auf Höhe der Heizzone 3 in die Polymerschmelze dosiert wurde. Die Polymerschmelze wurde als Strang aus einer Düse mit 3 mm Durchmesser abgezogen und nach Wasserkühlung granuliert. Das Granulat wurde 24 Stunden bei 80°C im Vakuum von 30 mbar getrocknet. Die mit diesem Granulat hergestellten Prüfkörper hatten für die Formmasse FM-2 (I) eine Shore Härte von 80A, für die Formmasse FM-2 (II) eine Shore Härte von 70 A und für die Formmasse FM-2 (III) eine Shore Härte von 78 A.

### Herstellung der Verbund-Prüfkörper

Die Verbund-Prüfkörper, sogenannte 2K-Schälplatten aus Rahmen u. Lasche, wurden mittels einer Arburg Allrounder 520A Spritzgussmaschine, ausgerüstet mit einer 30 mm Standard-Dreizonenschnecke, hergestellt. Dazu wurde in einer ersten Stufe (i) die Rahmen-Platte (Teilbereich (I)) aus der Formmasse FM-1 (d.h. den Polyamidformmassen B1, B2 und VB1 bis VB5) gespritzt. 25 Sekunden nach Beginn der Einspritzung der Rahmen-Platte wurde der Schieber, der die Kavität für den Teilbereich (II) während der Phase (i) besetzt hielt, aus dem Werkzeug herausgezogen. In diese nun freigewordene Kavität wurde dann in der zweiten Stufe (ii) die Formmasse FM-2 eingespritzt und so die flexible Lasche (Teilbereich (II)) ausgeformt. Die verwendeten Spritzguss-Parameter sind in der nachfolgenden Tabelle zusammengefasst. Der Verbund-Prüfkörper 1 ist in Figur 1 dargestellt. Der Rahmen hat eine Seitenlänge a von 120 mm, eine Breite b von 90 mm und eine Dicke g von 3 mm, während die Lasche 4 eine Seitenlänge e von 150 mm, eine Breite f von 30 mm und eine Dicke h von 1 mm aufweist. Der Rahmen 2 enthält eine Öffnung 3 mit einer Seitenlänge c von 55 mm und einer Breite d von 50 mm, welche so im Rahmen 2 positioniert ist, dass die Überlappung des Rahmens 2 mit der Lasche 4 eine Fläche von 50 x 30 mm² einnimmt. Die angussferne Seite der Lasche 4 befindet sich über der Rahmenöffnung 3.

| **Parameter** | **Einheit** | **Formmasse FM-1** | **Formmasse FM-2** |
|---|---|---|---|
| Temperatur Zylinder Zonen 0, 1, 2, 3, 4 | °C | 40, 260, 270, 280, 290 | 40, 180, 190, 200, 210 |
| Temperatur Düse | °C | 290 | 210 |
| Temperatur Heisskanal | °C | 290 | 290 |
| Temperatur Werkzeug | °C | 100 | 100 |
| Einspritzgeschwindigkeit | mm/s | 100 | 100 |
| Schneckendrehzahl | U/min | 80 | 100 |
| Staudruck | bar | 100 | 100 |
| Nachdruck | bar | 200 | 300 |

### Messmethoden

Die Prüfkörper wurden, sofern nichts anderes angegeben ist, in trockenem Zustand verwendet. Dazu wurden die Prüfkörper nach dem Spritzguss mindestens 48 h bei Raumtemperatur in trockener Umgebung, d.h. über Silicagel, gelagert.

Im Rahmen dieser Anmeldung wurden die folgenden Messmethoden verwendet:

### Schmelzpunkt (Tm) und Schmelzenthalpie (ΔHm):

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, Tg:

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

### Relative Viskosität, ηᵣₑₗ:

Die relative Viskosität wurde gemäss ISO 307 (2007) bei 20°C bestimmt. Dazu wurden 0.5 g Polymergranulat in 100 ml m-Kresol (soweit nicht anders angegeben) eingewogen, die Berechnung der relativen Viskosität (RV) nach RV = t/t₀ erfolgte in Anlehnung an Abschnitt 11 der Norm.

### Zug E-Modul:

Die Bestimmung des Zug-E-Moduls wurde gemäss ISO 527 (2012) bei 23°C mit einer Zuggeschwindigkeit von 1 mm/min an einem ISO-Zugstab (Typ A1, Masse 170 x 20/10 x 4) hergestellt gemäss der Norm: ISO/CD 3167 (2003), durchgeführt.

### Bruchspannung und Bruchdehnung:

Die Bestimmung von Bruchspannung und Bruchdehnung wurden gemäss ISO 527 (2012) bei 23°C mit einer Zuggeschwindigkeit von 5 mm/min an einem ISO-Zugstab, Typ A1 (Masse 170 x 20/10 x 4 mm), hergestellt gemäss der Norm ISO/CD 3167 (2003), durchgeführt.

### Schlagzähigkeit nach Charpy:

Die Bestimmung der Schlagzähigkeit nach Charpy wurde gemäss ISO 179/2*eU (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Kerbschlagzähigkeit nach Charpy:

Die Bestimmung der Kerbschlagzähigkeit nach Charpy wurde gemäss ISO 179/2*eA (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Shore Härte

Die Shore Härte gemäss den Verfahren A und D wurde mit einem Härteprüfgerät der Firma Karl Franknach nach ISO 7619-1 (2012-02) bestimmt. Angegeben sind jeweils die arithmetischen Mittelwerte aus 5 Messungen. Die dabei verwendeten Probekörper hatten die Dimension 60x60x4 mm und wurden bis unmittelbar vor der Prüfung, jedoch mindestens 48 h nach der Herstellung, trocken bei 23 °C gelagert. Die Messung wurde ebenfalls bei 23 °C durchgeführt, und die Werte nach 15 sec abgelesen.

### Verbundhaftung:

Die Verbund-Prüfkörper (2K-Schälplatte) gemäss Figur 1 für die Bestimmung der Verbundhaftung wurden für unterschiedliche Zeiten bei 70 °C und 62% relativer Feuchte gelagert. Die Prüfkörper wurden nach der Lagerung über Nacht (12 Stunden) in klimatisierter Umgebung bei 23 °C / 50% Rel. Feuchtigkeit bis zum Rollenschälversuch aufbewahrt. 0 Stunden Lagerung bedeutet, dass die hergestellten Verbund-Prüfkörper nach dem Spritzguss 48 h bei Raumtemperatur (23 °C) in trockener Umgebung, d.h. über Silicagel, gelagert wurden. Die im Folgenden im Zusammenhang mit dem Verbund-Prüfkörper und der Halterung für den Rollenschälversuch verwendeten Bezeichnungen beziehen sich auf Figur 1.

Die Verbundhaftung wurde mittels eines Rollenschälversuches bei 23 °C bestimmt, bei dem die 30 mm breite Lasche 4 (Teilbereich II) des für die Messung verwendeten Verbund-Prüfkörpers 1 über eine Umlenk-Rolle 7 im Winkel von 90° mittels einer Zugprüfmaschine mit einer Zuggeschwindigkeit von 50 mm/min vom Rahmen 2 (Teilbereich I) abgeschält wurde; in Tabelle 2 angegeben wird der aus fünf Einzelmessungen bestimmte Mittelwert der mittleren Schälkraft [N] über der Messstrecke. Dabei wurde der angussferne Teil der Lasche an der oberen Probenaufnahme und die Halterung 6 für den Prüfkörper an der unteren Probenaufnahme der Zugprüfmaschine befestigt. Die verwendete Umlenk-Rolle 7 hatte einen Durchmesser von 20 mm. Der Rahmen 2 des Verbund-Prüfkörpers kann sich in der Ebene senkrecht zur Zugachse Z frei bewegen und wird dabei über Fixier-Rollen 8 stabilisiert. Während des Schälversuches wurde der Rahmen 2 kontinuierlich über die gesamte Messstrecke in der Halterung verschoben, so dass die Bruchzone (Zone zwischen noch haftender und bereits gelöster Teilbereiche) stets in der Ebene der Zugachse Z lag.

### Diskussion der Resultate:

Der erfindungsgemässe Verbund mit einem Teilbereich (I) aus der Polyamid-Formmasse B1 und einem Teilbereich (II) aus der Formmasse FM-2 (I) weist eine sehr gute Verbundhaftung auf und behält diese gute Haftung auch nach fünftägiger Lagerung bei 70°C und 62% relativer Feuchte auf nahezu gleichhohem Niveau bei. Im Vergleich dazu ist die Verbundhaftung von VB4, das im Gegensatz zu B1 frei an Komponente (B) ist, zu FM-2 (I) bereits nach der Herstellung um 10% tiefer und nach der Lagerung ungenügend. Das gleiche Bild zeigt sich im Vergleich der Verbunde B2/FM-2 (I) und VB5/FM-2 (I), wobei für B2 eine hervorragende Haftung nach Herstellung und Lagerung gemessen werden kann, während für VB5 nach Lagerung eine ungenügende Haftung resultiert. Schaut man sich nun die Verbundhaftung zur Formmasse FM-2 (II) an, so ergibt sich für die erfindungsgemässe Formmasse B1 eine hervorragende Haftung vor und nach Lagerung, während die Haftung von VB4 bereits nach der Herstellung gegenüber B1 um den Faktor 2.5 erniedrigt ist und nach Lagerung ungenügend ausfällt. Die Modifikation der Polyamid-Formmasse mit MAH-gepfropften Polyolefinen gemäss dem Stand der Technik, wie sie die Vergleichsbeispiele VB1 bis VB3 repräsentieren, führt nicht zu Verbunden mit ausreichender Haftung. Keine oder eine nur sehr schwache Verbundhaftung wurde beobachtet, wenn Komponente (B) in beiden Formmassen bzw. in den Teilbereichen (I) und (II) des Verbundes gleichzeitig enthalten waren.

## Patentansprüche

1. Verbund enthaltend direkt aneinander grenzende und miteinander stoffschlüssig verbundene Teilbereiche (I) und (II) folgender Art:
(I) Teilbereich, gebildet aus einer thermoplastischen Formmasse FM-1 enthaltend wenigstens ein Polyamid (A) sowie optional Füll- und Verstärkungsstoffe (C) und Additive (D);
(II) Teilbereich, gebildet aus einer thermoplastischen Formmasse FM-2 enthaltend wenigstens ein olefinisches und/oder vinylaromatisches Polymer (E) sowie optional Füll- und Verstärkungsmittel (F), Weichmacher (G) und Additive (H);
wobei die Formmasse FM-1 oder FM-2 0.1 bis 5.0 Gewichtsprozent Polyethylenimin (B) oder eines Copolymeren oder Derivates davon enthält.

2. Verbund gemäss Anspruch 1, **dadurch gekennzeichnet, dass** die thermoplastische Formmasse FM-1 folgende Komponenten enthält:
(A) 30-99.9 Gewichtsprozent wenigstens eines Polyamides;
(B) 0.1-5.0 Gewichtsprozent Polyethylenimin oder Copolymere oder Derivate davon;
(C) 0-60 Gewichtsprozent Füll- und/oder Verstärkungsstoffe;
(D) 0-5.0 Gewichtsprozent Additive, verschieden von (A) - (C);
wobei die Summe gebildet aus (A)-(D) 100 Gewichtsprozent der thermoplastischen Formmasse FM-1 ergibt,
und dass die thermoplastischen Formmasse FM-2 folgende Komponenten enthält:
(E) 45-100 Gewichtsprozent wenigstens eines olefinischen und/oder vinylaromatischen Polymeren;
(F) 0-15 Gewichtsprozent Füll- und/oder Verstärkungsstoffe;
(G) 0-35 Gewichtsprozent Weichmacher;
(H) 0-5.0 Gewichtsprozent Additive, verschieden von (E), (F) und (G);
wobei die Summe gebildet aus (E) - (H) 100 Gewichtsprozent der thermoplastischen Formmasse FM-2 ergibt.

3. Verbund gemäss einem der vorhergehenden Ansprüche, **dadurch gekennzeichnet, dass** das wenigstens eine Polyamid (A) in einem Anteil von 31-79.5 Gewichtsprozent, vorzugsweise von 40-74 Gewichtsprozent, bezogen auf das Gesamtgewicht der Formmasse FM-1, vorliegt;
und/oder
das wenigstens eine olefinische und/oder vinylaromatische Polymer (E) in einem Anteil von 55-94.9 Gewichtsprozent, besonders bevorzugt von 65-89.8 Gewichtsprozent, bezogen auf das Gesamtgewicht der Formmasse FM-2, vorliegt.

4. Verbund gemäss Anspruch 1, **dadurch gekennzeichnet, dass** die thermoplastische Formmasse FM-1 folgende Komponenten enthält:
(A) 35-100 Gewichtsprozent wenigstens eines Polyamides;
(C) 0-60 Gewichtsprozent Füll- und/oder Verstärkungsstoffe;
(D) 0-5.0 Gewichtsprozent Additive, verschieden von (A) und (C);
wobei die Summe gebildet aus (A), (C) und (D) 100 Gewichtsprozent der thermoplastischen Polyamid-Formmasse FM-1 ergibt,
und dass die thermoplastische Formmasse FM-2 folgende Komponenten enthält:
(E) 40-99.9 Gewichtsprozent wenigstens eines olefinischen und/oder vinylaromatischen Polymeren;
(B) 0.1-5.0 Gewichtsprozent Polyethylenimin oder Copolymere oder Derivate davon;
(F) 0-15 Gewichtsprozent Füll- und/oder Verstärkungsstoffe;
(G) 0-35 Gewichtsprozent Weichmacher;
(H) 0-5.0 Gewichtsprozent Additive, verschieden von (E), (F), (G) und (B);
wobei die Summe gebildet aus (B) und (E)-(H) 100 Gewichtsprozent der thermoplastischen Formmasse FM-2 ergibt.

5. Verbund gemäss Anspruch 4, **dadurch gekennzeichnet, dass**
das wenigstens eine Polyamid (A) in einem Anteil von 35-80 Gewichtsprozent, vorzugsweise von 43-74.8 Gewichtsprozent, bezogen auf das Gesamtgewicht der Formmasse FM-1, vorliegt;
und/oder
das wenigstens eine olefinische und/oder vinylaromatische Polymer (E) in einem Anteil von 51-94.4 Gewichtsprozent, besonders bevorzugt von 62-89 Gewichtsprozent, bezogen auf das Gesamtgewicht der Formmasse FM-2, vorliegen.

6. Verbund gemäss einem der vorhergehenden Ansprüche, **dadurch gekennzeichnet, dass** das Polyethylenimin (B) in einem Anteil von 0.5-4.0 Gewichtsprozent, vorzugsweise von 0.8-3.0 Gewichtsprozent, bezogen auf das Gesamtgewicht der Formmasse FM-1 oder FM-2, vorliegt.

7. Verbund gemäss einem der vorhergehenden Ansprüche, **dadurch gekennzeichnet, dass** das wenigstens eine Polyamid (A) der Formmasse FM-1 ausgewählt ist als
teilkristalline acyclische aliphatische Polyamide (A1) aus der Gruppe bestehend aus: 46, 56, 66, 66/6, 69, 610, 612, 614, 616, 618, 810, 1010, 1012, 1014, 1016, 1212, 11, 12, 6/12, 66/6/610, wobei 66, 612, 614 und 616 bevorzugt sind;
und/oder
teilkristalline teilaromatische Polyamide (A2) aus der Gruppe bestehend aus: 6T/6I, 6T/66, 6T/6I/66, 6T/610, 6T/612, 6T/614, 6T/616, 9T, 9MT, 10T, 12T, 10T/6T, 11/10T, 12/10T, 11/9T, 12/9T, 10T/1010, 10T/612;
und/oder
cycloaliphatische Polyamide (A3) aus der Gruppe bestehend aus: MACM12/PACM12, MACM14/PACM14, MACM16/PACM16, MACM18/PACM18, 61/6T/MACMI/MACMT/12, 6I/MACMI/MACMT, 6I/PACMI/PACMT, 6I/6T/MACMI, 61/6T/612/MACMI/MACMT/MACM12, MACMI/MACMT/12, 6/IPDT, 61/6T/614/MACMI/MACMT/MACM14, 61/6T/616/MACMI/MACMT/MACM16, MACMI/MACM36, 12/PACMI, 12/MACMT, 61/PACMT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12;
und/oder
amorphe teilaromatische Polyamide (A4) aus der Gruppe bestehend aus: 5I, 6I, 6/6I, MXDI, MXDI/6I, MXD6/MXDI, 5T/5I, 6T/6I, 10T/10I, 3-6T (3-6 = 2,2,4- bzw. 2,4,4-Trimethylhexandiamin) oder Mischungen davon, wobei die Systeme 5T/5I, 6T/6I oder 10T/10I einen Anteil von weniger als 50 Mol-% 5T-, 6T- bzw. 10T-Einheiten aufweisen, und wobei ein Zusammensetzungsbereich 5T:5I, 6T:6I bzw. 10T/10I von 20:80 bis 45:55, insbesondere 25:75 bis 40:60, jeweils angegeben als Mol-%, bevorzugt wird.

8. Verbund gemäss einem der vorhergehenden Ansprüche, **dadurch gekennzeichnet, dass** das wenigstens eine Polyamid (A) der Formmasse FM-1 folgende Komponenten enthält oder aus den folgenden Komponenten besteht:
20-100 Gewichtsprozent, vorzugsweise 40-80 Gewichtsprozent wenigstens eines teilkristallinen acyclischen aliphatischen Polyamids (A1) und/oder wenigstens eines teilaromatischen teilkristallinen Polyamids (A2),
0-80 Gewichtsprozent, vorzugsweise 20-60 Gewichtsprozent wenigstens eines cycloaliphatischen Polyamids (A3) und/oder eines amorphen teilaromatischen Polyamids (A4),
wobei sich die Gewichtsprozente der Komponenten (A1) bis (A4) auf 100 Gewichtsprozent der Komponente (A) ergänzen;
oder
20-80 Gewichtsprozent, vorzugsweise 25-75 Gewichtsprozent wenigstens eines teilkristallinen acyclischen aliphatischen Polyamids (A1) ausgewählt aus der Gruppe bestehend aus PA66, PA610, PA612, PA614 und PA616;
20-80 Gewichtsprozent, vorzugsweise 25-75 Gewichtsprozent wenigstens eines amorphen teilaromatischen Polyamids (A4) ausgewählt aus der Gruppe bestehend aus 5T/5I, 6T/6I und 10T/10I,
wobei sich die Gewichtsprozente der Komponenten (A1) und (A4) auf 100 Gewichtsprozent der Komponente (A) ergänzen.

9. Verbund gemäss einem der vorhergehenden Ansprüche, **dadurch gekennzeichnet, dass** die Formmasse FM-2 als Komponente (E) wenigstens ein vinylaromatisches Polymer, bevorzugt wenigstens 50 Gewichtsprozent, insbesondere wenigstens 70 Gewichtsprozent, jeweils bezogen auf die Gesamtmenge von (E), eines vinylaromatischen Polymers und gegebenenfalls wenigstens ein Polyolefin enthält.

10. Verbund gemäss einem der vorhergehenden Ansprüche, **dadurch gekennzeichnet, dass** das wenigstens eine olefinische und/oder vinylaromatische Polymer (E) der Formmasse FM-2 ausgewählt ist aus der Gruppe bestehend aus: Styrol-Ethylen-Butylen-Styrol-Blockcopolymeren (SEBS), Styrol-Ethylen-Propylen-Styrol-Blockcopolymeren (SEPS), Styrol-Butylen-Styrol-Blockcopolymeren (SBS), Styrol-Styrol-Butylen-Styrol-Blockcopolymeren (SSBS), Polyethylen (PE), Polypropylen (PP), Polybutadien (PB), Poly-4-methylpenten, Ethylen-Propylen-Copolymere, Ethylen-Buten-Copolymer, Ethylen-Methylhexadien-Copolymere, Propylen-Methylhexadien-Copolymere, Ethylen-Octen-Copolymer, Ethylen-Propylen-Buten-Copolymere, Ethylen-Propylen-Hexen-Copolymere, Ethylen-Propylen-Methylhexadien-Copolymere, Poly-(ethylen-vinylacetat) (EVA), Ethylen-Ethylacrylat-Copolymer (EEA), Ethylen-Hexen-Copolymer, Ethylene-Propylen-Dien-Terpolymere sowie Mischungen aus diesen Polymermaterialien.

11. Verbund gemäss einem der vorhergehenden Ansprüche, **dadurch gekennzeichnet, dass** das wenigstens eine olefinische und/oder vinylaromatische Polymer (E) der Formmasse FM-2 mit Carbonsäure- oder Carbonsäureanhydrid-Gruppen gepfropft ist;
und/oder
das wenigstens eine olefinische und/oder vinylaromatische Polymer (E) gepfropft ist mit Acrylsäure, Methacrylsäure oder Maleinsäureanhydrid;
und/oder
der Pfropfgrad 0.1 bis 4.0, bevorzugt 0.4 bis 2.5 und besonders bevorzugt 0.5 bis 2.0 Gewichtsprozent, bezogen auf das gepfropfte Polymer (E), beträgt.

12. Verbund gemäss einem der vorhergehenden Ansprüche, **dadurch gekennzeichnet, dass** es sich beim Polyethylenimin der Komponente (B) um ein verzweigtes Polyethylenimin handelt, das vorzugsweise ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist;
und/oder
dass es sich beim Polyethylenimin der Komponente (B) um ein verzweigtes Polyethylenimin handelt mit einer zahlenmittleren Molmasse Mₙ im Bereich von 500-50.000 g/mol, vorzugsweise im Bereich von 1000-2500 g/mol,
und/oder dass es sich beim Polyethylenimin der Komponente (B) um ein verzweigtes Polyethylenimin mit einem Gehalt an primären Aminogruppen im Bereich von 5000-20.000 µeq/g, vorzugsweise im Bereich von 7.000-12.000 µeq/g handelt;
und/oder
dass es sich beim Polyethylenimin der Komponente (B) um ein verzweigtes Polyethylenimin mit einem Wassergehalt von weniger als 4 Gewichtsprozent, bevorzugt von weniger als 3 Gewichtsprozent, insbesondere bevorzugt von weniger als 2 Gewichtsprozent handelt.

13. Verbund gemäss einem der vorhergehenden Ansprüche, **dadurch gekennzeichnet, dass** die Formmasse FM-1 die Füll- und Verstärkungsstoffe der Komponente (C) in einem Anteil im Bereich von 20-60 Gewichtsprozent, vorzugsweise im Bereich von 25-55 Gewichtsprozent enthält;
und/oder
die Formmasse FM-2 die Füll- und Verstärkungsstoffe der Komponente (F) in einem Anteil im Bereich von 0-10 Gewichtsprozent enthält, vorzugsweise frei von Komponente (F) ist;
und/oder
dass die Komponenten (C) und (F) bestehen aus:
partikulärer Füllstoff (C1) und (F1), insbesondere bevorzugt ausgewählt aus der Gruppe bestehend aus: Russ, Talk, Glimmer, Silikate, Quarz, Wollastonit, Kaolin, Kieselsäuren, Magnesiumcarbonat, Magnesiumhydroxid, Kreide, gemahlenes oder gefälltes Calciumcarbonat, Kalk, Feldspat, anorganische Pigmente, einschliesslich Bariumsulfat, Zinkoxid, Zinksulfid, Lithopone, Titandioxid (Rutil, Anatas), Eisenoxid, Eisenmanganoxid, Metalloxide, insbesondere Spinelle, einschliesslich Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente einschliesslich Titan-Zink-Rutil, Nickel-Antimon-Titanat, Chrom-Antimon-Titanat, hart- oder weichmagnetische Metalle oder Legierungen bzw. Keramiken, hohlkugelige Silikatfüllstoffe, Aluminiumoxid, Bornitrid, Borcarbid, Aluminiumnitrid, Calciumfluorid und Mischungen hiervon;
und/oder
faserförmiger Verstärkungsstoff (C2) und (F2), bevorzugt ausgewählt aus der Gruppe bestehend aus: Glasfasern, Kohlenstoffasern, Graphitfasern, Aramidfasern, Nanotubes oder Mischungen davon, wobei die Fasern der Komponente (C2) und (F2) mit kreisförmiger oder nicht-kreisförmiger Querschnittsfläche vorliegen können.

14. Verbund gemäss einem der vorhergehenden Ansprüche, **dadurch gekennzeichnet, dass** die Additive der Komponente (D) in der Formmasse FM-1 in einem Anteil im Bereich von 0.1-4.0 Gewichtsprozent, vorzugsweise 0.2-2.0 Gewichtsprozent vorliegt;
und/oder
die Additive der Komponente (H) in der Formmasse FM-2 in einem Anteil im Bereich von 0.1-4.0 Gewichtsprozent, vorzugsweise 0.2-2.0 Gewichtsprozent vorliegt;
und/oder
dass die Additive der Komponenten (D) und (H) ausgewählt sind aus der Gruppe bestehend aus: Stabilisatoren, Alterungsschutzmittel, Antioxidantien, Antiozonantien, Lichtschutzmittel, UV-Stabilisatoren, UV-Absorber, UV-Blocker, anorganische Hitzestabilisatore, insbesondere auf Basis von Kupferhalogeniden und Alkalihalogeniden, organische Hitzestabilisatore, Leitfähigkeitsadditive, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, organische Pigmente und Farbstoffe, Markierungsstoffe und Mischungen hiervon.

15. Verbund gemäss einem der vorhergehenden Ansprüche, **dadurch gekennzeichnet, dass** der Weichmacher der Komponente (G) in einem Anteil im Bereich von 5-35 Gewichtsprozent, vorzugsweise 10-33 Gewichtsprozent in der Formmasse FM-2 vorliegt; und/oder
dass der Weichmacher der Komponente (G) ausgewählt ist aus der Gruppe bestehend aus paraffinischen und naphthenischen Ölen.

16. Verbund gemäss einem der vorhergehenden Ansprüche, **dadurch gekennzeichnet, dass** der Teilbereich (I), gebildet aus der thermoplastischen Formmasse FM-1, eine Shore Härte von wenigstens 70D, bevorzugt von wenigstens 75D und insbesondere bevorzugt von mindestens 80D, jeweils bestimmt nach ISO 7619-1 (2012-02) in trockenem Zustand, aufweist
und/oder
der Teilbereich (II), gebildet aus der thermoplastischen Formmasse FM-2, eine Shore Härte von höchstens 60D, bevorzugt von höchstens 50D und insbesondere bevorzugt von höchstens 39D oder 90A, jeweils bestimmt nach ISO 7619-1 (2012-02) in trockenem Zustand, aufweist.

17. Verfahren zur Herstellung eines Verbundes nach einem der vorhergehenden Ansprüche, **dadurch gekennzeichnet, dass** der Verbund in einem Spritzgussverfahren hergestellt wird, das folgende Stufen umfasst:
(i) Einlegen eines Formkörpers, enthaltend wenigstens einen Teilbereich (I) gebildet aus der Formmasse FM-1, in eine Spritzgussform oder Einspritzen der thermoplastischen Formmasse FM-1 in eine Spritzgussform zur Ausformung weinigstens eines Teilbereiches (I)
und
(ii) Einspritzen der thermoplastischen Formmasse FM-2 zur Ausformung wenigstens eines Teilbereiches (II),
wobei die Schmelzen der Formmmnassen FM-1 und FM-2 parallel oder hintereinander ohne oder ohne wesentliche Vermischung in die Spritzgießform eingetragen werden, und wobei sich die Teilbereiche (I) und (II) mindestens in einem Punkt berühren.

18. Verwendung von Polyethylenimin oder eines Derivats oder Copolymers davon in einem Verbund enthaltend Teilbereiche (I), gebildet aus einer Formmasse FM-1 enthaltend Polyamid, und enthaltend Teilbereiche (II), gebildet aus einer Formmasse FM-2 enthaltend olefinisches und/oder vinylaromatisches Polymer, zur Verbesserung der Verbundhaftung zwischen den Teilbereichen (I) und (II).
